# EUROPÄISCHE PATENTANMELDUNG

(11) **EP 4 342 343 A1**
(43) Veröffentlichungstag der Anmeldung: **27.03.2024**
(21) Anmeldenummer: 23198375.0
(22) Anmeldetag: 19.09.2023
(51) Int. Cl.: A47J 31/44, G01G 19/56, G01G 15/00

(54) **MULTISENSORPLATTE, GETRÄNKEZUBEREITUNGSAUTOMAT, GETRÄNKEZUBEREITUNGSAUTOMATENSYSTEM, UND VERFAHREN ZUR BESTIMMUNG EINES GEWICHTS UND EINER POSITION VON EINEM BEHÄLTER FÜR MATERIAL EINES GETRÄNKEZUBEREITUNGSAUTOMATEN**

(30) Priorität: 20.09.2022 DE 102022209860
(71) Anmelder: Schaerer AG, 4528 Zuchwil (CH)
(72) Erfinder: von Däniken, Michael, 4852 Rothrist (CH); Lienhard, Andreas, 4552 Derendingen (CH); Frey, Florian, 4612 Wangen bei Olten (CH)
(74) Vertreter: Pfenning, Meinig & Partner mbB

(57) **Zusammenfassung**

Es werden eine Multisensorplatte, ein Getränkezubereitungsautomat, ein Getränkezubereitungsautomatensystem und ein Verfahren zur Bestimmung eines Gewichts und einer Position von einem Behälter für Material eines Getränkezubereitungsautomaten bereitgestellt. Die Multisensorplatte weist mindestens zwei Gewichtssensoren auf, die in einer Richtung parallel zu einer Messfläche eines Oberteils der Multisensorplatte an zwei voneinander beabstandeten Positionen angeordnet sind. Damit erlaubt die Multisensorplatte sowohl die Bestimmung des Gewichts als auch der Position des Behälters auf besagter Messfläche und Veränderungen des Gewichts und der Position des Behälters entlang der Messfläche im Laufe der Zeit.

## Beschreibung

Es werden eine Multisensorplatte, ein Getränkezubereitungsautomat, ein Getränkezubereitungsautomatensystem und ein Verfahren zur Bestimmung eines Gewichts und einer Position von einem Behälter für Material eines Getränkezubereitungsautomaten bereitgestellt. Die Multisensorplatte weist mindestens zwei Gewichtssensoren auf, die in einer Richtung parallel zu einer Messfläche eines Oberteils der Multisensorplatte an zwei voneinander beabstandeten Positionen angeordnet sind. Damit erlaubt die Multisensorplatte sowohl die Bestimmung des Gewichts als auch der Position des Behälters auf besagter Messfläche und Veränderungen des Gewichts und der Position des Behälters entlang der Messfläche im Laufe der Zeit.

Getränkezubereitungsautomaten, wie beispielsweise Kaffeeautomaten, müssen immer höheren Anforderungen gerecht werden. Von Kaffeeautomaten wird erwartet, dass auf Knopfdruck ein gewünschtes Heissgetränk ganz ohne manuelle Beihilfe zubereitet und ausgegeben wird. Diese Automaten sollen in jeder Umgebung, wie Gastronomie, Gewerbe oder Büro, zuverlässig funktionieren. Die Anforderungen sind oft vielfach und beziehen sich auf Qualität, Zubereitungsarten, Anzahl Tassen pro Tag, integrierte Milch- und Zutatensysteme, aber auch Service- und Reinigungsintervalle.

Die EP2 548 484 A1 offenbart eine Getränkezubereitungsmaschine mit einem Aufnahmebereich zur Aufnahme mindestens eines Ver- oder Entsorgungsbehälters, und mit einer Sensoranordnung zur Erfassung eines Befüllungszustands der Getränkezubereitungsmaschine in Bezug auf den Ver- oder Entsorgungsbehälter. Die Getränkezubereitungsmaschine weist eine erste und eine zweite Erfassungseinrichtung auf. Bei der ersten Erfassungseinrichtung wird durch das Gewicht des Ver- oder Entsorgungsbehälters die Erfassungseinrichtung mechanisch betätigt, d.h. ein Vorhandensein eines Behälters bestätigt, wobei nur das Über- oder Unterschreiten eines Schwellwerts einer Befüllung eines Behälters oder eines Gesamtgewichts detektiert wird. Die zweite Erfassungseinrichtung erfasst eine weitere Information des Ver- oder Entsorgungsbehälters, um z.B. auf die räumliche Grösse des Ver- oder Entsorgungsbehälters zu schliessen. Die erfassten Informationen sind unzureichend, um ein Gewicht und eine Position eines Behälters in der Getränkezubereitungsmaschine ermitteln zu können.

Services und Reinigungen an Getränkezubereitungsautomaten sind oft ad-hoc durchzuführen und meist schlecht planbar. Zudem fällt der Automat für die Service- oder Reinigungszeit aus. Bei bekannten Getränkezubereitungsautomaten sind regelmässige, im Voraus geplante Service- und Reinigungsintervalle möglich, jedoch nicht immer notwendig, da die Benutzung und der Betreib des Getränkezubereitungsautomaten von verschiedensten Parametern stark beeinflusst wird, d.h. es kann ein Service nach einem definierten Zeitraum geplant sein, der unter Umständen unnötig ist.

Ferner erlauben die bekannten Getränkezubereitungsautomaten keine genaue Bestimmung einer Qualitätsveränderung von Zutaten im Laufe des Betriebs. Wie lange sich beispielsweise ein Milchcontainer schon in einem Zubereitungsautomaten befindet und geöffnet ist, kann nicht genau bestimmt werden, obwohl dieser Zeitraum Auswirkungen auf die Qualität der Milch (z.B. bedingt durch eine Abnehmende Frische der Milch) hat. Das Auf- oder Nachfüllen von Milch in den Behälter (insbesondere warmer Milch) kann einen Einfluss auf die Getränkequalität haben. Wenn z.B. bei einer Reinigung Türen für einen Kühlbereich längere Zeit über offen gelassenen werden, kann dies ebenfalls Einfluss auf die Getränkequalität haben. Die Qualität und die Füllstände sind insbesondere bei Qualitätsgetränken von Bedeutung, jedoch bisher nicht mit der nötigen Sorgfalt berücksichtigt worden.

Ausgehend hiervon ist es die Aufgabe der vorliegenden Erfindung, eine Multisensorplatte, einen Getränkezubereitungsautomaten, ein Getränkezubereitungsautomatensystem und ein Verfahren zur Bestimmung eines Gewichts und einer Position von einem Behälter für Material eines Getränkezubereitungsautomaten bereitzustellen, die mindestens einen aus dem Stand der Technik bekannten Nachteil überwinden. Insbesondere soll eine Multisensorplatte bereitgestellt werden, die eine Erfassung von Gewichtswerten in Bezug auf einen Behälter mit Material auch dann ermöglicht, wenn mehr als ein Behälter auf der Multisensorplatte platziert ist und die ermöglicht, eine Position von mindestens einem Behälter zu bestimmen, der auf der Multisensorplatte platziert ist. Ferner soll ein Getränkezubereitungsautomat, ein Getränkezubereitungsautomatensystem und ein Verfahren bereitgestellt werden, die sich durch besagte Vorteile auszeichnen. Der Getränkezubereitungsautomat und das Getränkezubereitungsautomatensystem soll zudem eine hohe Akzeptanz bei Benutzern und Betreibern hinsichtlich der Anwendbarkeit und Zuverlässigkeit aufweisen. Dabei sollen der Getränkezubereitungsautomat und das Getränkezubereitungsautomatensystem vorzugsweise möglichst eine hohe Autonomie aufweisen und sich durch eine Optimierung des Zutatenverbrauchs auszeichnen. Ihr Betrieb soll insbesondere planbarer und effizienter werden.

Die Aufgabe wird gelöst durch die Multisensorplatte mit den Merkmalen von Anspruch 1, der Getränkezubereitungsautomat mit den Merkmalen von Anspruch 8, das Getränkezubereitungsautomatensystem mit den Merkmalen von Anspruch 12 und das Verfahren mit den Merkmalen von Anspruch 13. Die abhängigen Ansprüche zeigen vorteilhafte Weiterbildungen auf.

Erfindungsgemäß wird eine Multisensorplatte für einen Getränkezubereitungsautomaten bereitgestellt, umfassend
ein Oberteil mit einer (bevorzugt ebenen) Messfläche zur Positionierung eines Behälters für Material;
ein Unterteil, das im Wesentlichen der Form des Oberteils entspricht und mit dem Oberteil verbunden ist, wobei zwischen dem Oberteil und dem Unterteil zumindest bereichsweise ein Zwischenraum ausgebildet ist;
mindestens zwei Gewichtssensoren, die im Zwischenraum angeordnet sind und jeweils dazu geeignet sind, aus einer auf die Messfläche einwirkenden Gewichtskraft ein Signal zu generieren; und
eine Steuereinheit, die konfiguriert ist, die von den mindestens zwei Gewichtssensoren generierten Signale zu empfangen und daraus jeweils einen Gewichtswert zu ermitteln,
dadurch gekennzeichnet, dass
die mindestens zwei Gewichtssensoren in einer Richtung parallel zur Messfläche des Oberteils an zwei voneinander beabstandeten Positionen angeordnet sind, und
die Steuereinheit konfiguriert ist, die jeweils ermittelten Gewichtswerte an einer elektronischen Schnittstelle der Multisensorplatte bereitzustellen.

Die erfindungsgemäße Multisensorplatte eignet sich dazu, Gewichtswerte von mindestens zwei Gewichtssensoren, die voneinander beanstandet angeordnet sind, an der elektronischen Schnittstelle bereitzustellen. Diese Daten erlauben eine Erfassung nicht nur eines Gewichts und einer Gewichtsveränderung von mindestens einem Behälters für Material, der auf der Messfläche der Multisensorplatte angeordnet ist, sondern auch einer Position und einer Positionsveränderung (d.h. Bewegung) von dem mindestens einem Behälter entlang der Messfläche des Oberteils der Multisensorplatte. Folglich ist mithilfe der erfindungsgemäßen Multisensorplatte eine zeitaufgelöste Gewichtsveränderung und Positionsveränderung eines Behälters für Material (bzw. eines im Behälter befindlichen Materials) möglich. Damit eignet sich die Multisensorplatte insbesondere zur Verwendung in einem Getränkezubereitungsautomaten, da die Erfassung dieser Parameter die Art und Weise des Zutatenverbrauchs optimieren kann und die Autonomie des Getränkezubereitungsautomaten erhöht. Ein Betrieb eines mit der erfindungsgemäßen Multisensorplatte ausgestatteten Getränkezubereitungsautomaten wird damit planbarer und effizienter, wodurch die Akzeptanz bei Benutzern und Betreibern hinsichtlich der Anwendbarkeit und Zuverlässigkeit gesteigert ist.

Es ist beispielsweise auch möglich, auf die Messfläche des Oberteils der Multisensorplatte zwei oder noch mehr verschiedene Behälter mit Material zu platzieren und die Signale der Gewichtssensoren an der elektronischen Schnittstelle bereitzustellen. Über eine mit der elektronischen Schnittstelle verbundene Verarbeitungseinheit können die Signale ausgewertet werden und eine Position und ein Gewicht (d.h. ein Befüllungsniveau) der jeweiligen Behälterfür Material ermittelt werden. Dies erlaubt dem Benutzer eine einfachere Benutzung der Multisensorplatte, da nicht für jeden Behälter eines bestimmten Materials eine eigene Multisensorplatte benötigt wird. Dadurch steigt die Akzeptanz bei Benutzern und Betreibern hinsichtlich der Anwendbarkeit der Multisensorplatte. Die Gewichtserfassung über mindestens zwei Gewichtssensoren erhöht zudem die Zuverlässigkeit der Gewichtsbestimmung.

Die elektronische Schnittstelle der Multisensorplatte kann (direkt) mit einer Verarbeitungseinheit verbunden sein. Die elektronische Schnittstelle der Multisensorplatte kann optional über ein Netzwerk (z.B. das Internet), bevorzugt über eine Cloud, mit der Verarbeitungseinheit verbunden sein.

Die Verarbeitungseinheit ist bevorzugt Teil eines Getränkezubereitungsautomaten, oder Teil eines Computers, der über das Netzwerk (z.B. Internet), bevorzugt über eine Cloud, mit der elektronischen Schnittstelle der Multisensorplatte verbunden ist. Die Verarbeitungseinheit ist insbesondere als eine Zentralverarbeitungseinheit ausgestaltet. Die Zentralverarbeitungseinheit kann konfiguriert sein, eine Rückmeldung an die Multisensorplatte und/oder weitere Geräte (von Benutzern, Betreibern, oder Dienstleistern) zu senden.

Die Verarbeitungseinheit kann mit der die elektronische Schnittstelle der Multisensorplatte über eine drahtlose Verbindung verbunden sein oder über ein Kabel verbunden sein. Im Falle einer drahtlosen Verbindung kann die Energiebereitstellung für die kabellose Verbindung über eine Induktionsschleife oder Batterie erfolgen, die im Innenraum der Multisensorplatte angeordnet ist. Die drahtlose Verbindung hat den Vorteil, dass die Multisensorplatte bewegt werden kann, ohne dass ein Kabel mitbewegt oder an die Verarbeitungseinheit angeschlossen werden muss, was die Handhabung der Multisensorplatte erleichtert. Zudem wird eine Reinigung der Multisensorplatte erleichtert, da kein Kabel und Anschluss mit zu reinigen ist. Im Falle einer Verbindung über ein Kabel verlässt das Kabel die Multisensorplatte bevorzugt an einer Oberfläche der Multisensorplatte, die im Wesentlichen senkrecht zur Messfläche des Oberteils der Multisensorplatte ist. Das Kabel verlässt die Multisensorplatte besonders bevorzugt an einer Ausnehmung der Multisensorplatte, die in eine Richtung parallel zur Messfläche des Oberteils verläuft, wobei die Ausnehmung besonders bevorzugt U-förmig ausgestaltet ist (U-förmig bezieht sich auf die Form der Ausnehmung bei einem Blick auf die Messfläche der Oberseite der Multisensorplatte). Die U-förmige Ausgestaltung hat den Vorteil, dass die Austrittsstelle des Kabels aus der Multisensorplatte besser gegenüber einer mechanischen Belastung auf das Kabel geschützt ist und damit die Kabelverbindung stabiler gegenüber Einwirkung von mechanischen Kräften auf die Multisensorplatte ist. Zudem erlaubt diese Ausgestaltung den Verzicht auf einen Knickschutz, wodurch eine flachere Bauweise ermöglicht wird.

Die Verarbeitungseinheit ist bevorzugt konfiguriert, zumindest aus Gewichtswerten, die an der elektronischen Schnittstelle der Multisensorplatte bereitgestellt werden, ein Gewicht und eine Position von mindestens einem auf der Messfläche des Oberteils positionierten Behälter für Material zu ermitteln. Dadurch kann von der Verarbeitungseinheit eine Position und ein Gewicht, sowie eine Positionsänderung und eine Gewichtsänderung, von mindestens einem Behälter für Material, der auf der Multisensorplatte angeordnet ist, ermittelt werden.

Die Verarbeitungseinheit kann konfiguriert sein, ein Taragewicht, kurz Tara, des mindestens einen Behälters für Material in der Ermittlung des Gewichts (und optional auch Position) von dem mindestens einen auf der Messfläche des Oberteils positionierten Behälter für Material zu berücksichtigen. Folglich kann ein Gewichtswert ermittelt werden, der dem Gewicht des Inhalts des Behälters für Material entspricht, also einem Gewicht des Materials selbst. Dadurch kann eine exakte Kenntnis über die tatsächliche Bevorratung erlangt werden, was die Präzision der Erfassung der Menge des Materials erhöhen kann und ein optimiertes Materialmanagement bereitstellen kann. Es kann somit eine höhere Stufe der Qualitätssicherung erreicht werden, z.B. bezüglich Frische oder wie Bestes "in cup" Resultat. Ein Ablaufdatum von einem Material (z.B. Milch) kann beispielsweise kontrolliert werden und/oder die Wiederverwendung von einem Material (z.B. Milch) im Behälter über eine gewisse Zeit kann erfasst werden. Damit kann auch eine Anpassung von Parametern für Getränke und für Getränkerezepte erfolgen. Ebenso sind Qualitätschecks und Qualitätsvalidierungen während des Betriebs möglich. Ein weiterer Vorteil ist die Möglichkeit des Projizierens von herstellbaren Getränken und Getränkerezepten oder das Antizipieren von Getränkeproduktionen. Zudem ist eine Anpassung von Rezepten aufgrund der Füllstände von Zutaten möglich. Die Qualitätssicherung kann auch für Plausibilitäts-Check-Mengen eingesetzt werden. Die verarbeiteten Werte können somit der Qualität des Materials entsprechen, beispielsweise der Frische der Milch. Weiterhin können die verarbeiteten Werte der Zeitdauer eines benutzen oder verwendeten Materials entsprechen. Diese Informationen können den Benutzern und Betreibern helfen, einen optimalen Getränkeservice bereitzustellen und anzubieten.

Die Multisensorplatte kann eine Benutzungstemperatur im Bereich von -5°C und +50°C aufweisen.

Die Multisensorplatte weist bevorzugt einen Temperatursensor auf, der dazu geeignet ist, eine Temperatur einer Umgebung der Multisensorplatte zu erfassen und daraus ein Signal zu generieren, wobei die Steuereinheit der Multisensorplatte konfiguriert ist, die vom Temperatursensor generierten Signale zu empfangen und daraus einen Temperaturwert zu ermitteln, und wobei die Steuereinheit der Multisensorplatte konfiguriert ist, den ermittelten Temperaturwert an der elektronischen Schnittstelle der Multisensorplatte bereitzustellen. Diese Ausgestaltung hat den Vorteil, dass bei der Gewichtsbestimmung über die Multisensorplatte die Umgebungstemperatur berücksichtigt werden kann, was eine korrektere Gewichtsbestimmung ermöglicht. Grund hierfür ist, dass eine Gewichtserfassung temperaturabhängig ist und der Temperatursensor eine entsprechende Kalibrierung erlaubt.

Bevorzugt ist die Verarbeitungseinheit konfiguriert, aus den Gewichtswerten, die jeweils an der elektronischen Schnittstelle der Multisensorplatte bereitgestellt werden, und unter Berücksichtigung des Temperaturwerts, der an der elektronischen Schnittstelle der Multisensorplatte bereitgestellt wird, ein Gewicht und eine Position von mindestens einem auf der Messfläche des Oberteils positionierten Behälter für Material zu ermitteln. Dadurch kann von der Verarbeitungseinheit auf korrektere Art und Weise eine Position und ein Gewicht, sowie eine Positionsänderung und eine Gewichtsänderung, von mindestens einem Behälter für Material, der auf der Multisensorplatte angeordnet ist, ermittelt werden. Beispielsweise kann auch erkannt werden, ob Material in dem Behälter zur Neige geht und nachgefüllt werden muss. Ferner kann erkannt werden, welche Menge an Material sich vor und nach einem Befüllen des Behälters im Behälter befindet (z.B. Vermischung von altem mit frischem Verbrauchsmaterial).

Ferner kann die Verarbeitungseinheit konfiguriert sein, aus den Gewichtswerten, die jeweils an der elektronischen Schnittstelle der Multisensorplatte bereitgestellt werden, und unter Berücksichtigung des Temperaturwerts, der an der elektronischen Schnittstelle der Multisensorplatte bereitgestellt wird, zu ermitteln, ob der Behälter für Material mit einem warmen oder kalten Material befüllt wurde (d.h. einem Material, dessen Temperatur von der Umgebungstemperatur der Multisensorplatte abweicht). Dadurch kann von der Verarbeitungseinheit beispielsweise ermittelt werden, ob ein im Behälter befindliches Material (z.B. Milch) nach einer kürzeren Zeit abläuft (z.B. wenn der Behälter mit warmer Milch befüllt wurde), d.h. nicht mehr zur Zubereitung eines Getränks verwendet werden sollte.

Abgesehen davon kann die Verarbeitungseinheit konfiguriert sein, aus den Gewichtswerten, die jeweils an der elektronischen Schnittstelle der Multisensorplatte bereitgestellt werden, und unter Berücksichtigung des Temperaturwerts, der an der elektronischen Schnittstelle der Multisensorplatte bereitgestellt wird, zu ermitteln, ob eine vorgegebene Temperatur in der Umgebung der Multisensorplatte, bevorzugt in einem Aufnahmebereich eines Getränkezubereitungsautomaten, eingehalten wird. Dadurch kann von der Verarbeitungseinheit beispielsweise ermittelt werden, ob ein Kühler in der Umgebung der Multisensorplatte (z.B. im Aufnahmebereich eines Getränkezubereitungsautomaten) korrekt arbeitet und/oder ob die Umgebung der Multisensorplatte (z.B. ein Aufnahmebereich eines Getränkezubereitungsautomaten) einem ungewünschten Luftaustausch unterliegt (z.B. unerwünschtes Eintreten von warmer Luft durch eine offene Tür eines Aufnahmebereichs eines Getränkezubereitungsautomaten, der gekühlt ist).

Das Oberteil und das Unterteil der Multisensorplatte können flüssigkeitsdicht miteinander verbunden sein, wobei bevorzugt die gesamte Multisensorplatte flüssigkeitsdicht ausgestaltet ist. Wenn das Unterteil und das Oberteil flüssigkeitsdicht miteinander verbunden sind, kann keine Feuchtigkeit in das Innere der Multisensorplatte eindringen. Dies hat den Vorteil, dass eine Flüssigkeitsbedingte Beschädigung von Komponenten im Innenraum der Multisensorplatte (z.B. der mindestens zwei Gewichtssensoren) vermieden werden kann. Vorzugsweise sind das Unterteil und das Oberteil verschweisst. Eine derartig dichte Multisensorplatte ist zudem leicht zu reinigen, da auch Reinigungsflüssigkeiten nicht in das Innere der Multisensorplatte eindringen können.

Ferner können das Oberteil und das Unterteil der Multisensorplatte so miteinander verbunden sein, dass sie einen flachen Zylinder mit einer quadratischen Grundfläche (d.h. einen flachen Quader) oder mit einer kreisförmigen Grundfläche (d.h. einen flachen Rundzylinder) ausbilden. Die flache und flächenbündige Verbindung des Oberteils und Unterteils bewirkt eine sehr kompakte Ausgestaltung der Multisensorplatte, die eine Ansammlung von Schmutz auf der Oberfläche der Multisensorplatte reduziert und eine Reinigung der Multisensorplatte erleichtert. Die Form eines flachen Quaders ist für Behälter für Material, die eine rechteckige Auflagefläche (z.B. Milchpacks) aufweisen, vorteilhaft, da die Messfläche des Oberteils der Multisensorplatte optimal ausgenutzt werden kann. Entsprechend ist die Form eines flachen Rundzylinders für Behälter mit Material, die eine kreisförmige Auflagefläche (z.B. runde Flaschen mit Sirup) aufweisen, vorteilhaft.

Abgesehen davon können das Oberteil und das Unterteil der Multisensorplatte in einer Richtung senkrecht auf die Messfläche des Oberteils zusammen eine Höhe von maximal 1,5 cm aufweisen. Dies bewirkt eine sehr kompakte Ausgestaltung der Multisensorplatte und hat den Vorteil, dass die Multisensorplatte auf einfache Art und Weise in einem Aufnahmebereich (z.B. einem Kühlbereich) eines Getränkezubereitungsautomaten positioniert werden kann.

Dass Oberteil und/oder das Unterteil der Multisensorplatte können ganz oder teilweise aus Kunststoff bestehen. Dies erlaubt ein geringes Gewicht und eine leichte Reinigung der Multisensorplatte.

Die mindestens zwei Gewichtssensoren der Multisensorplatte können ein Sensorsignal abgeben, das digitalisierbar und filterbar ist. Dies ermöglicht eine gute Weiterverarbeitung der Signale. Das jeweilige Sensorsignal kann proportional zur Belastung des jeweiligen Sensors durch den Behälter mit Material sein. Die mindestens zwei Gewichtssensoren generieren Signale, über die für mindestens einen Behälter, der auf der Messfläche des Oberteils der Multisensorplatte platziert ist, ein Gewichtsprofil erstellt werden kann.

Die mindestens zwei Gewichtssensoren der Multisensorplatte können jeweils als Lastsensor ausgestaltet sein. Ferner können die mindestens zwei Gewichtssensoren der Multisensorplatte als Dehnmessstreifen-Sensor ausgestaltet sein. Natürlich ist auch denkbar, dass einer der beiden Gewichtssensoren als Lastsensor ausgestaltet ist und der andere der beiden Gewichtssensoren als Dehnmessstreifen-Sensor ausgestaltet ist. Ganz besonders bevorzugt weist der Zwischenraum der Multisensorplatte mindestens vier Gewichtssensoren auf, die jeweils dazu geeignet sind, aus einer Gewichtskraft auf die Messfläche des Oberteils der Multisensorplatte ein Signal zu generieren. Diese können ebenfalls jeweils als Lastsensoren oder als Dehnmessstreifen-Sensoren ausgestaltet sein. Alle hier im Zusammenhang mit den Erfindungsgegenständen offenbarten Merkmale, die sich auf eine Ausführung mit mindestens zwei Gewichtssensoren beziehen, können sich entsprechend auf die Ausführung mit mindestens vier Gewichtssensoren beziehen. Beispielsweise sind die mindestens vier Gewichtssensoren der Multisensorplatte in einer Richtung parallel zur Messfläche des Oberteils an vier voneinander beabstandeten Positionen angeordnet, und die Steuereinheit ist konfiguriert, die jeweils von diesen Gewichtssensoren ermittelten Gewichtswerte an der elektronischen Schnittstelle der Multisensorplatte bereitzustellen.

Die Steuereinheit der Multisensorplatte kann als Steuerkarte ausgeführt sein, welche die Sensorsingale verarbeitet.

Die elektronische Schnittstelle der Multisensorplatte kann ein serielles Interface sein.

Erfindungsgemäß wird ferner ein Getränkezubereitungsautomat, insbesondere ein Kaffeeautomat, bereitgestellt, umfassend:
einen Aufnahmebereich zur Aufnahme von mindestens einem Behälter für Material;
eine erfindungsgemäße Multisensorplatte, wobei die Multisensorplatte im Aufnahmebereich positioniert ist; und
eine Verarbeitungseinheit, die kommunikativ mit der elektronischen Schnittstelle der Multisensorplatte verbunden ist, wobei die Verarbeitungseinheit konfiguriert ist, zumindest aus Gewichtswerten, die an der elektronischen Schnittstelle der Multisensorplatte bereitgestellt werden, ein Gewicht und eine Position von mindestens einem auf der Messfläche des Oberteils positionierten Behälter für Material zu ermitteln.

Da die erfindungsgemäße Multisensorplatte im Aufnahmebereich des Getränkezubereitungsautomaten positioniert ist, befindet sich die Sensorik lokal am Getränkezubereitungsautomaten. Von der Multisensorplatte erfasste Signale sind an die Verarbeitungseinheit des Getränkezubereitungsautomaten übertragbar (z.B. kabelgebunden oder kabellos). Der Getränkezubereitungsautomat kann über seine Verarbeitungseinheit eine Position und ein Gewicht, sowie eine Positionsänderung und eine Gewichtsänderung, von mindestens einem Behälter für Material, der auf der Multisensorplatte des Getränkezubereitungsautomaten angeordnet ist, ermitteln.

Der Getränkezubereitungsautomat kann ferner einen zweiten, optional auch einen dritten, Aufnahmebereich aufweisen, wobei in dem zweiten Aufnahmebereich, optional auch in dem dritten Aufnahmebereich, eine erfindungsgemäße Multisensorplatte positioniert ist. Die Verarbeitungseinheit kann dann kommunikativ mit der elektronischen Schnittstelle der jeweiligen Multisensorplatte verbunden sein und konfiguriert sein, zumindest aus Gewichtswerten, die an der elektronischen Schnittstelle der jeweiligen Multisensorplatte bereitgestellt werden, ein Gewicht und eine Position von mindestens einem auf der Messfläche des Oberteils der jeweiligen Multisensorplatte positionierten Behälter für Material zu ermitteln.

Die von der Multisensorplatte des Getränkezubereitungsautomaten an die Verarbeitungseinheit des Getränkezubereitungsautomaten übermittelten Signale erhöhen die Autonomie und die Betriebssicherheit des Getränkezubereitungsautomaten, da beispielsweise Zeiten minimiert werden können, in denen keine Getränke vom Getränkezubereitungsautomaten produziert werden können. Die Signale können vor Ort vom Getränkezubereitungsautomaten verarbeitet werden und/oder extern über eine Telemetrie-Lösung in einer mit einem Computer verbundenen Cloud verarbeitet werden. Die von den Signalen kodierte Information kann somit direkt am Getränkezubereitungsautomaten zur Verfügung stehen und kann auch in längerfristige Verarbeitungen einfliessen, um beispielsweise eine Statistik zu erstellen.

Die Verarbeitungseinheit kann lokaler Bestandteil des Getränkezubereitungsautomaten sein oder auch ein externer Bestandteil des Getränkezubereitungsautomaten sein (z.B. ein externer Computer und/oder eine externe Datenbank). Ist die Verarbeitungseinheit ein lokaler Bestandteil des Getränkezubereitungsautomaten, kann die Verarbeitung der Signale direkt vor Ort am Getränkezubereitungsautomaten erfolgen, d.h. der Getränkezubereitungsautomat kann die Signale an Ort und Stelle verarbeiten. Ist die Verarbeitungseinheit ein externer Bestandteil des Getränkezubereitungsautomaten, erfolgt die Verarbeitung der Signale extern (d.h. z.B. über einen externen Computer oder einer mit einem externen Computer verbundenen Cloud). Die Signale können von der Verarbeitungseinheit konfigurierbar sein. Es ist auch denkbar, dass die Verarbeitungseinheit sowohl ein lokaler Bestandteil des Getränkezubereitungsautomaten ist und ein externer Bestandteil des Getränkezubereitungsautomaten ist. Die Verarbeitungseinheit kann außerhalb des Aufnahmebereichs bzw. der Aufnahmebereiche des Getränkezubereitungsautomaten angeordnet sein oder innerhalb mindestens eines Aufnahmebereichs des Getränkezubereitungsautomaten angeordnet sein.

In dem Behälterfür Material kann sich ein Material befinden. Das Material kann eine Substanz sein, die von einem Getränkezubereitungsautomaten prozessiert (d.h. verwendet wird), also ein Verbrauchsmaterial sein. Ein solches Verbrauchsmaterial kann ausgewählt sein aus der Gruppe bestehend aus Milch (Behälter ist beispielsweise eine Milchtüte), Sirup (Behälter ist beispielsweise ein Sirupkanister), Frischwasser (Behälter ist beispielsweise ein Wassertank), Reinigungsmittel (Behälter ist beispielsweise ein Reinigungsmitteltank), Entkalker (Behälter ist beispielsweise ein Entkalkertank), Pulver (Behälter ist beispielsweise ein Pulverbehälter) und Kaffeebohnen (Behälter ist beispielsweise ein Bohnenbehälter). Das Material kann ferner eine Substanz sein, die von einem Getränkezubereitungsautomat prozessiert wurde (d.h. verwendet wurde), also ein Abfallmaterial sein. Ein solches Abfallmaterial kann ausgewählt sein aus der Gruppe bestehend aus Schmutzwasser (Behälter ist beispielsweise eine Abtropfschale), Kaffeesatz (Behälter ist beispielsweise ein Satzbehälter) und Kombinationen hiervon.

Der Behälter für Material hat ein Eigengewicht, das bei einer Füllstandüberwachung berücksichtigt werden kann. Der Behälter für Material kann einen Deckel aufweisen. Das Gewicht des Behälters ist meist bekannt, sodass die Tara von dem Behälter direkt in Abzug gebracht werden kann. Das Gewicht des Materials im Behälter ist dann ermittelbar. Wenn ein neuer Behälter (z.B. eine neue Verpackung) zum Einsatz kommt, kann dieser z.B. leer auf der Messfläche der Oberseite der Multisensorplatte positioniert werden, um die Tara zu ermittelten und abzuspeichern.

Der Aufnahmebereich des Getränkezubereitungsautomaten kann eine Detektiervorrichtung aufweisen, die konfiguriert ist, eine Form und/oder Art eines Behälters (bzw. Gefäßes) zu detektieren. Dies kann auch für andere Aufnahmebereiche des Getränkezubereitungsautomaten gelten, falls dieser mehr als einen Aufnahmebereich aufweist. Optional weisen alle Aufnahmebereiche des Getränkezubereitungsautomaten jeweils eine Detektiervorrichtung auf, die konfiguriert ist, eine Form und/oder Art eines Behälters (bzw. Gefäßes) zu detektieren. Die Detektionsvorrichtung ist (jeweils) konfiguriert, Informationen über eine Form und/oder Art eines Behälters (bzw. Gefäßes) an die Verarbeitungseinheit des Getränkezubereitungsautomaten zu senden. Die Verarbeitungseinheit des Getränkezubereitungsautomaten ist bevorzugt konfiguriert, aus Informationen über eine Form und/oder Art eines Behälters, die von der (jeweiligen) Detektionsvorrichtung bereitgestellt werden, und zumindest aus Gewichtswerten (bevorzugt auch Temperaturwerten), die an der elektronischen Schnittstelle der Multisensorplatte bereitgestellt werden, ein Gewicht von einem Material in einem Innenraum eines auf der Detektionsfläche des Oberteils positionierten Behälters für Material zu ermitteln (d.h. ein Gewicht von einem Inhalt eines auf der Detektionsfläche des Oberteils positionierten Behälters für Material zu ermitteln). Dies ist beispielsweise möglich, wenn in der Verarbeitungseinheit jeder Form und/oder Art eines bestimmten Behälters ein bestimmtes Leergewicht des Behälters zugeordnet ist, d.h. besagte Zuordnung beispielsweise in der Verarbeitungseinheit des Getränkezubereitungsautomaten gespeichert ist und/oder in einem Datenspeicher des Getränkezubereitungsautomaten, einem Netzwerk (z.B. einer Cloud) und/oder einer zentralen Verarbeitungseinheit eines Getränkezubereitungsautomatensystems gespeichert ist, die den Getränkezubereitungsautomaten umfasst.

Der Aufnahmebereich des Getränkezubereitungsautomaten, in dem die Multisensorplatte des Getränkezubereitungsautomaten positioniert ist, kann gekühlt sein, d.h. einen gekühlten Bereich darstellen. Hierfür kann der Getränkezubereitungsautomat eine Kühlvorrichtung enthalten, die zur Kühlung des Aufnahmebereichs geeignet ist. In dieser Ausgestaltung ist es vorteilhaft, wenn die Multisensorplatte einen Temperatursensor aufweist, denn über diesen Sensor kann die Multisensorplatte entsprechend kalibriert werden und/oder die Kühlvorrichtung reguliert werden.

Bevorzugt ist die Verarbeitungseinheit des Getränkezubereitungsautomaten konfiguriert, zumindest aus den Gewichtswerten, die jeweils an der elektronischen Schnittstelle der Multisensorplatte bereitgestellt werden, und unter Berücksichtigung eines Temperaturwerts, der an der elektronischen Schnittstelle der Multisensorplatte bereitgestellt wird, ein Gewicht und eine Position von mindestens einem auf der Messfläche des Oberteils positionierten Behälter für Material zu ermitteln. Damit ist es dem Getränkezubereitungsautomaten möglich, über seine Verarbeitungseinheit auf korrektere Art und Weise eine Position und ein Gewicht, sowie eine Positionsänderung und eine Gewichtsänderung, von mindestens einem Behälter für Material, der auf der Multisensorplatte des Getränkezubereitungsautomaten angeordnet ist, zu ermitteln. Beispielsweise kann auch erkannt werden, ob Material in dem Behälter zur Neige geht und nachgefüllt werden muss. Ferner kann erkannt werden, welche Menge an Material sich vor und nach einem Befüllen des Behälters im Behälter befindet (z.B. Vermischung von altem mit frischem Verbrauchsmaterial).

Abgesehen davon kann die Verarbeitungseinheit des Getränkezubereitungsautomaten konfiguriert sein, zumindest aus den Gewichtswerten, die jeweils an der elektronischen Schnittstelle der Multisensorplatte bereitgestellt werden, und unter Berücksichtigung eines Temperaturwerts, der an der elektronischen Schnittstelle der Multisensorplatte bereitgestellt wird, zu ermitteln, ob der Behälter für Material mit einem warmen oder kalten Material befüllt wurde (d.h. einem Material, dessen Temperatur von der Umgebungstemperatur der Multisensorplatte abweicht). Dadurch kann von der Verarbeitungseinheit beispielsweise ermittelt werden, ob ein im Behälter befindliches Material (z.B. Milch) nach einer kürzeren Zeit abläuft (z.B. wenn der Behälter mit warmer Milch befüllt wurde), d.h. nicht mehr zur Zubereitung eines Getränks verwendet werden sollte. Damit kann auch ein Zeitpunkt ermittelt werden, an dem ein Material, das sich in dem mindestens eine Behälter auf der Multisensorplatte befindet, keine gewünschte Frische mehr aufweist. Der Temperatursensor kann hierbei beispielsweise ein Einfüllen von warmer Milch in den Behälter erkennen und damit einen (kürzeren) Zeitraum ableiten, an dem die Milch keine gewünschte Frische mehr aufweist. Folglich kann sichergestellt werden, dass der Getränkezubereitungsautomat nur ausreichend frische Materialien zur Zubereitung von Getränken verwendet, wodurch eine hohe Getränkequalität sichergestellt werden kann.

Abgesehen davon kann die Verarbeitungseinheit konfiguriert sein, aus den Gewichtswerten, die jeweils an der elektronischen Schnittstelle der Multisensorplatte bereitgestellt werden, und unter Berücksichtigung des Temperaturwerts, der an der elektronischen Schnittstelle der Multisensorplatte bereitgestellt wird, zu ermitteln, ob eine vorgegebene Temperatur in der Umgebung der Multisensorplatte, bevorzugt in einem Aufnahmebereich eines Getränkezubereitungsautomaten, eingehalten wird. Dadurch kann von der Verarbeitungseinheit beispielsweise ermittelt werden, ob ein Kühler in der Umgebung der Multisensorplatte (z.B. im Aufnahmebereich eines Getränkezubereitungsautomaten) korrekt arbeitet und/oder ob die Umgebung der Multisensorplatte (z.B. ein Aufnahmebereich eines Getränkezubereitungsautomaten) einem ungewünschten Luftaustausch unterliegt (z.B. unerwünschtes Eintreten von warmer Luft durch eine offene Tür eines Aufnahmebereichs eines Getränkezubereitungsautomaten, der gekühlt ist). Damit ist es beispielsweise im Falle eines gekühlten Aufnahmebereichs des Getränkezubereitungsautomaten möglich zu erkennen, ob der Aufnahmebereich über einen längeren Zeitraum eine unerwünscht hohe Temperatur aufweist (z.B. über eine geöffnete Tür des Aufnahmebereichs). Die Verarbeitungseinheit kann konfiguriert sein, eine entsprechende Warnung am Getränkezubereitungsautomaten anzeigen zu lassen, einen Zeitpunkt anzupassen, an dem ein Material keine gewünschte Frische mehr aufweist, den Getränkezubereitungsautomaten zu einer stärkeren Kühlung zu veranlassen, und/oder den Getränkezubereitungsautomaten zu sperren. Dadurch kann eine höhere Lebensmittelsicherheit gewährleistet werden.

Die Verarbeitungseinheit kann konfiguriert sein, das Ermitteln von einem Gewicht und einer Position von dem mindestens einen Behälter für Material, optional auch das Ermitteln einer Temperatur, in regelmäßigen Zeitabständen zu wiederholen (z.B. im Abstand von ≤ 5 Minuten, bevorzugt im Abstand von ≤ 1 Minute, besonders bevorzugt im Abstand von ≤ 10 Sekunden, optional im Abstand von ≤ 1 Sekunde). Dies ermöglicht eine regelmäßige Überwachung von Gewicht und Position von dem mindestens einen Behälter, d.h. eine Ermittlung von einer Gewichtsänderung und einer Positionsänderung von dem mindestens einen Behälter in regelmäßigen Abständen im Laufe derZeit. Dadurch wird eine Verbrauchsbestimmung für Materialien möglich und es kann eine Reichweitenplanung erzielt werden, die für optimale Interventionsintervalle (z.B. Auffüllen von Material bzw. Reinigung und/oder Entkalkung des Getränkezubereitungsautomaten) genutzt werden kann. Das Auffüllen von Material bzw. Zutaten kann genauer veranlasst und vorgenommen werden. Ein Bezug von Getränken kann besser überwacht werden und es kann eine allfällige Manipulation festgestellt werden. Eine rechtzeitige Wartung kann nicht nur vorgenommen werden, sondern zeitgerecht erfasst und in Auftrag gegeben werden. Ferner kann die Verarbeitungseinheit konfiguriert sein, ein ermitteltes Gewicht, optional auch eine ermittelte Position, von dem mindestens einen Behälter für Material zur Bewertung zu verwenden, ob in Bezug auf den Behälter für Material und/oder in Bezug auf ein Material in diesem Behälter ein Bestellsignal ausgelöst wird. Hierfür kann die Verarbeitungseinheit konfiguriert sein, einen Ist-Wert eines Gewichts, optional auch einen Ist-Wert einer Position, von dem mindestens einen Behälter für Material mit einem Grenzwert für den mindestens einen Behälter für Material zu vergleichen und in Abhängigkeit von dem Vergleich ein Bestellsignal auslösen (z.B. bei einem festgestellten Unterschreiten des Grenzwerts). Damit lässt sich eine konstante Füllstandüberwachung, d.h. eine Ist-Situation von Material (z.B. Zutaten und/oder Abfällen) realisieren. Dazu zählen alle flüssigen Materialen wie Milch, Frisch-/Trinkwasser, Abwasser, Kaffee (gebrüht), Sirup, Reiniger und Entkalker und/oder Abfall, und alle soliden Materialen wie Bohnen, Pulver, Kaffeesatz, Reiniger, Entkalker, und/oder Abfall.

Abgesehen davon kann die Verarbeitungseinheit konfiguriert sein, ein ermitteltes Gewicht, optional auch eine ermittelte Position, von dem mindestens einen Behälter für Material zur Bestimmung einer zeitlichen Verfügbarkeit des Behälters für Material und/oder eines Materials in diesem Behälter zu verwenden. Hierfür kann die Verarbeitungseinheit konfiguriert sein, Ist-Werte eines Gewichts, optional auch Ist-Werte einer Position, von dem mindestens einen Behälter für Material über einen bestimmten Zeitraum zu erfassen (z.B. einen Zeitraum von ≤ 1 Jahr, ≤ 1 Monat oder ≤ 1 Tag) und daraus eine zeitliche Veränderung der Ist-Werte über den bestimmten Zeitraum zu ermitteln. Auf dieser Art und Weise kann ein Nachfüllen von Materialien frühzeitig bzw. rechtzeitig am Getränkezubereitungsautomaten angezeigt werden und/oder Materialien frühzeitig bzw. rechtzeitig vom Getränkezubereitungsautomaten (z.B. über eine Verbindung mit dem Internet) bei einem Lieferanten geordert werden. Nachfüllmengen und/oder Bestellungen bezüglich der Menge können somit dem tatsächlichen Verbrauch angepasst werden. Eine Lagerung von grösseren Beständen von Materialien oder Zutaten kann daher entfallen. Haltbarkeitsüberschreitungen entfallen oder können ganz vermieden werden. Eine Entsorgung von unbenutzten Zutaten, die die Haltbarkeit überschritten haben, entfällt.

Darüber hinaus kann die Verarbeitungseinheit konfiguriert sein, ein ermitteltes Gewicht, optional auch eine ermittelte Position, von dem mindestens einen Behälter für Material zur Bestimmung einer zeitlichen Verfügbarkeit und/oder Frische des Materials zu verwenden und zu veranlassen eine Zeit bis zum Verbrauch des Materials und/oder einem Ablauf der Frische des Materials am Getränkezubereitungsautomaten anzuzeigen.

Die Verarbeitungseinheit kann konfiguriert sein, die ermittelte zeitliche Veränderung über den bestimmten Zeitraum zu verwenden, um eine Prognose zu erstellen, in welchem Zeitraum das Material im Behälter verbraucht sein wird und/oder keine ausreichende Qualität mehr aufweisen wird. Die Verarbeitungseinheit kann konfiguriert sein, ein Bestellsignal für das Material bzw. den Behälter für das Material von dieser Prognose abhängig zu machen, d.h. z.B. ein Bestellsignal bereits zeitlich vor einem Zeitpunkt auszulösen, an dem ein Verbrauch und/oder Qualitätsverlust prognostiziert wurde.

Ferner kann die Verarbeitungseinheit konfiguriert sein, die ermittelte zeitliche Veränderung über den bestimmten Zeitraum mit einem Soll-Wert für diesen Zeitraum zu vergleichen und in Abhängigkeit von dem Vergleich ein Einstellungssignal auslösen. Handelt es sich bei dem Behälter für Material beispielsweise um einen Bohnenbehälter, kann hierfür eine Gewichtsabnahme der Bohnen während des bestimmten Zeitraums eines Mahlvorgangs erfasst werden (Ist-Wert). Wenn die Gewichtsabnahme nicht das gewünschte Ergebnis liefert (Soll-Wert), kann ein Einstellungssignal zur Veränderung der Mahlmenge ausgelöst werden, wodurch die Mahlmenge auf einen gewünschten Soll-Wert eingestellt werden kann und sich eine Qualitätssicherung bzw. eine Verbesserung der Getränkequalität realisieren lässt.

Darüber hinaus kann die Verarbeitungseinheit konfiguriert sein, ermittelte Werte an ein Netzwerk, bevorzugt das Internet, zu übermitteln. Somit kann eine weitere Verarbeitung der ermittelten Werte ortsunabhängig und optimiert erfolgen.

Das Verfahren kann bevorzugt weiter ein Senden einer oder mehrere Rückmeldungen umfassen. Diese können für den Benutzer oder Betreiber individuell genutzt werden. Die Benutzerführung kann entsprechend angepasst werden. Dies kann Vorschläge und Anpassungen der Benutzerführung, der Verfügbarkeit, oder auch von Promotionen, aufgrund genügend oder ungenügend vorhandener Zutaten beinhalten. Wenn zum Beispiel ein Automat aufgrund fehlender Zutaten keinen Cappuccino herstellen kann, dann können weiterhin oder alternativ herstellbare Getränke angezeigt oder beworben werden.

Erfindungsgemäß wird ferner ein Getränkezubereitungsautomatensystem bereitgestellt, umfassend mehrere erfindungsgemäße Getränkezubereitungsautomaten, wobei sich die mehreren Getränkezubereitungsautomaten eine einzige Verarbeitungseinheit eines erfindungsgemäßen Getränkezubereitungsautomaten teilen. Anders ausgedrückt weist das Getränkezubereitungsautomatensystem nur eine einzige Verarbeitungseinheit auf, die von einem einzelnen erfindungsgemäßen Getränkezubereitungsautomaten des Systems stammt und die mit der jeweiligen elektronischen Schnittstelle der jeweiligen Multisensorplatte der anderen erfindungsgemäßen Getränkezubereitungsautomaten des Systems kommunikativ verbunden ist.

Das Getränkezubereitungsautomatensystem hat den Vorteil, dass die Verarbeitung der Signale der einzelnen Multisensorplatten der einzelnen Getränkezubereitungsautomaten zentral erfolgt (d.h. in einer einzigen Verarbeitungseinheit), was das Getränkezubereitungsautomatensystem auf ressourcen-schonende Art und Weise und in möglichst platzsparender Art und Weise bereitstellen lässt. Hierbei ist es auch möglich, Signale von mehreren Getränkezubereitungsautomaten zu vergleichen. Hierbei kann ein Einsatz von künstlicher Intelligenz durch maschinelles Lernen einer vorausschauenden Instandhaltung aber auch einem verbesserten Betriebsmanagement dienen. So können die zentral erfassten Informationen dazu dienen, eine optimierte Routenplanung zur Versorgung der einzelnen Getränkezubereitungsautomaten mit Materialien zu bestimmen. Eine Abrechnung oder Verrechnung von Material kann mittels gesammelten Informationen erfolgen.

Erfindungsgemäß wird zudem ein Verfahren zur Bestimmung eines Gewichts und einer Position von einem Behälter für Material eines Getränkezubereitungsautomaten, insbesondere für einen Kaffeeautomaten, vorgestellt, umfassend die Schritte:
Bereitstellen eines erfindungsgemäßen Getränkezubereitungsautomaten;
Positionieren von mindestens einem Behälter für Material auf der Multisensorplatte des Getränkezubereitungsautomaten; und
Ermitteln von einem Gewicht und einer Position von dem mindestens einen Behälter für Material zumindest aus Gewichtswerten, die an der elektronischen Schnittstelle der Multisensorplatte bereitgestellt werden.

In dem erfindungsgemäßen Verfahren erfolgt das Ermitteln von einem Gewicht und einer Position von dem mindestens einen Behälter für Material bevorzugt aus Gewichtswerten, die an der elektronischen Schnittstelle der Multisensorplatte bereitgestellt werden, und unter Berücksichtigung eines Temperaturwerts, der an der elektronischen Schnittstelle der Multisensorplatte bereitgestellt wird.

In dem Verfahren kann das Ermitteln von einem Gewicht und einer Position von dem mindestens einen Behälter für Material, optional auch ein Ermitteln von einer Temperatur, in regelmäßigen Zeitabständen wiederholt werden.

Ferner kann in dem Verfahren ein ermitteltes Gewicht, optional auch eine ermittelte Position, von dem mindestens einen Behälter für Material zur Bewertung verwendet werden, ob in Bezug auf den Behälter für Material und/oder in Bezug auf ein Material in diesem Behälter ein Bestellsignal ausgelöst wird.

Darüber hinaus kann in dem Verfahren ein ermitteltes Gewicht, optional auch eine ermittelte Position, von dem mindestens einen Behälter für Material zur Bestimmung einer zeitlichen Verfügbarkeit des Behälters für Material und/oder eines Materials in diesem Behälter verwendet werden.

Ferner kann in dem Verfahren ein ermitteltes Gewicht, optional auch eine ermittelte Position, von dem mindestens einen Behälter für Material, zur Bestimmung einer optimalen Routenplanung eines Lieferanten für Material verwendet werden.

Im Folgenden wird nun die vorliegende Erfindung anhand konkreter Ausführungsbeispiele und Figuren näher erläutert, ohne diese auf die hier dargestellten, konkreten Ausführungsformen einschränken zu wollen. Der Einfachheit halber werden in den Figuren die gleichen Teile mit den gleichen Bezugszeichen versehen.

Es zeigen:
- Fig. 1: eine Multisensorplatte in einer dreidimensionalen Darstellung;
- Fig. 2: eine Multisensorplatte ohne Oberteil mit Komponenten;
- Fig. 3: eine Multisensorplatte in einer dreidimensionalen Darstellung mit einem Loch; und
- Fig. 4: einen Getränkezubereitungsautomat mit Multisensorplatte zur Materialbestimmung;
- Fig. 5: einen Getränkezubereitungsautomat mit mehreren Multisensorplatten zur entsprechenden Materialbestimmung;
- Fig. 6: eine Vielzahl von an einem Netzwerk angeschossenen Getränkezubereitungsautomaten sowie eine externe Verarbeitungseinheit;
- Fig. 7: eine Vielzahl von an einem Netzwerk angeschossenen Getränkezubereitungsautomaten sowie eine Zentralverarbeitungseinheit und eine Bestell- oder Betriebserfassungseinheit;
- Fig. 8: eine schematische Darstellung eines Verfahrens zur Bestimmung von Material für einen Getränkezubereitungsautomaten.
- Fig. 9: eine Skizze einer erfindungsgemäßen Multisensorplatte und des Prinzips, wie aus zwei Gewichtssensoren auf ein Gewicht und eine Position eines Behälters für Material geschlossen werden kann.

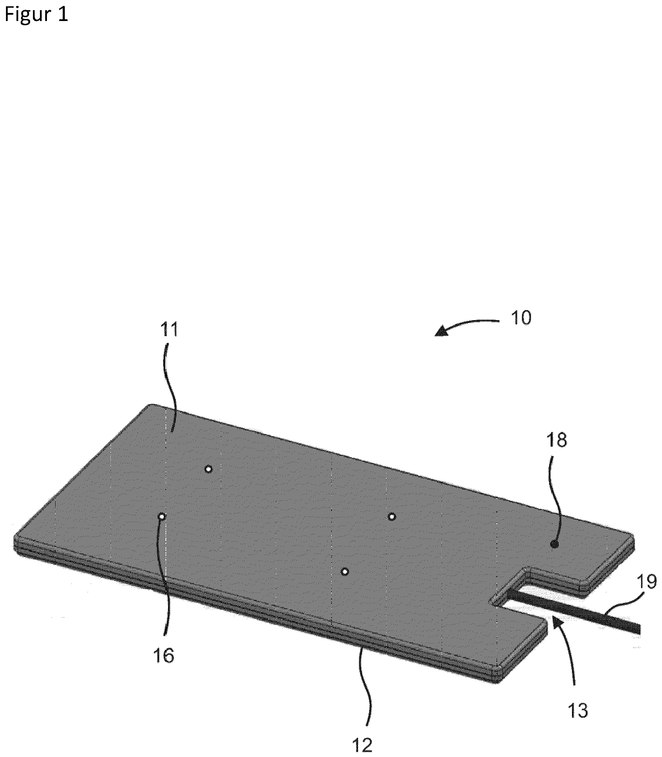

Figur 1 zeigt eine Multisensorplatte 10 in einer dreidimensionalen Darstellung. Die Multisensorplatte 10 kann auch als Zutatenwaage bezeichnet werden oder, wenn diese für Milch bestimmt ist, auch als Milchwaage. Die Multisensorplatte 10 umfasst ein Oberteil 11 und ein Unterteil 12, die in einer bevorzugten Ausführungsform aus Kunststoff bestehen. Das Oberteil 11 weist eine Messfläche auf, worauf ein zu wiegender Behälter für Material (bevorzugt gefüllt mit Material) positionierbar ist. Das Unterteil 12 entspricht im Wesentlichen der Form des Oberteils 11. Das Unterteil 12 und das Oberteil 11 sind dicht miteinander verbunden, sogar bevorzugt wasserdicht nach IP67. In einer bevorzugten Ausführungsform sind das Unterteil 12 und das Oberteil 11 miteinander verschweisst. Die Dichtheit garantiert eine sichere Funktion, auch dann, wenn z.B. Flüssigkeit auf oder über die Multisensorplatte 10 läuft. Zudem ist eine gute Reinigung der Multisensorplatte 10 gegeben. Die Multisensorplatte 10 umfasst ein Kabel 19, welches im Inneren mit der Steuereinheit (nicht dargestellt) verbunden ist. Das Kabel 19 verlässt die Multisensorplatte 10 an einer Ausnehmung 13, die vorzugsweise U-förmig ausgestaltet ist, jedoch auch andere Formen aufweisen kann. Die Ausnehmung 13 dient dem Knickschutz des Kabels 19 und somit der längeren Lebensdauer der Multisensorplatte 10. Das Kabel 19 kann als USB-Verbindung ausgeführt sein.

Die Multisensorplatte 10 umfasst in der dargestellten Ausführungsform vier Gewichtssensoren 16. Jeder Gewichtssensor 16 generiert aus einer Gewichtskraft auf die Messfläche ein entsprechendes Signal. Die Gewichtssensoren 16 sind nur zur Verdeutlichung dargestellt, jedoch in der Regel von aussen nicht sichtbar, da sie im Innenraum der Multisensorplatte 10 angeordnet sind, genauso wie ein neben der Ausnehmung 13 dargestellter Temperatursensor 18. Im Inneren bzw. im Innenraum der Multisensorplatte 10 (nicht dargestellt), ist eine Steuereinheit, vorzugsweise mittig, angeordnet, welche die generierten Signale verarbeitet und ermittelte Werte zur Verarbeitung an den Getränkezubereitungsautomaten (nicht dargestellt), die Verarbeitungseinheit (nicht dargestellt) und/oder Zentralverarbeitungseinheit (nicht dargestellt) überträgt. Die Multisensorplatte 10 kann in einer besonderen Ausführungsform mindestens zwei kapazitive Gewichtssensoren 16 umfassen, die als Lastsensor ausgeführt sind. Die Gewichtssensoren 16 sind mit der Steuereinheit 14 verbunden. In einer bevorzugten Ausführungsform umfasst die Multisensorplatte 10 zumindest zwei Gewichtssensoren 16, die als Dehnmessstreifen-Gewichtssensoren (DMS) ausgestaltet und mit der Steuereinheit 14 verbunden sind. In einer weiteren bevorzugten Ausführungsform weist die Multisensorplatte 10 die Abmessungen 290 x 156 x 13,45 mm auf und/oder ist bis zu einem Gewicht von ca. 500 g präzise. Der Gewichtsbereich beträgt 0,1 - 20 kg bei einer Auflösung von +/-0,1 kg. Das Material des Gehäuses, also Unterteil 12 und das Oberteil 11, kann Lexan PC umfassen. Die Multisensorplatte 10 weist eine chemische Beständigkeit gegenüber gebräuchlichsten Reinigungssubstanzen auf. Die Stromversorgung erfolgt mit 5 V über das Kabel 19. Die Signale werden mit 3.3 V bei <10 mA übertragen. In einer kabellosen Ausführungsform erfolgt die Energiebereitstellung über Induktion oder eine Batterie.

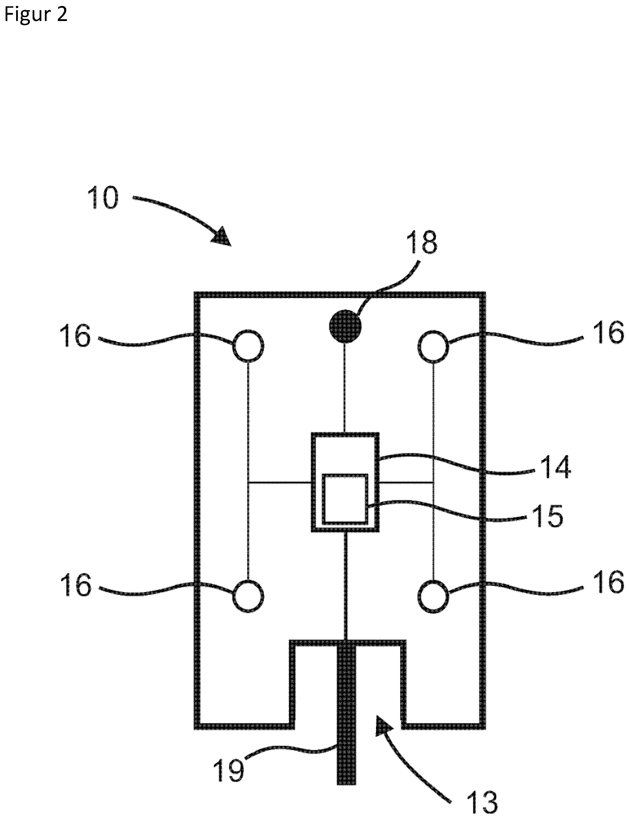

Figur 2 zeigt eine Multisensorplatte 10 in einer Draufsicht ohne Oberteil mit den entsprechenden Komponenten. Mittig angeordnet ist die Steuereinheit 14 und eine Schnittstelle 15 (bzw. Sendeeinheit), welche beide eine Einheit bilden können. Daran angeschlossen sind die Gewichtssensoren 16, der Temperatursensor 18, und das Kabel 19. Der Temperatursensor 18 ist in dieser Ausführungsform gegenüber der U-förmigen Ausnehmung 13 angeordnet.

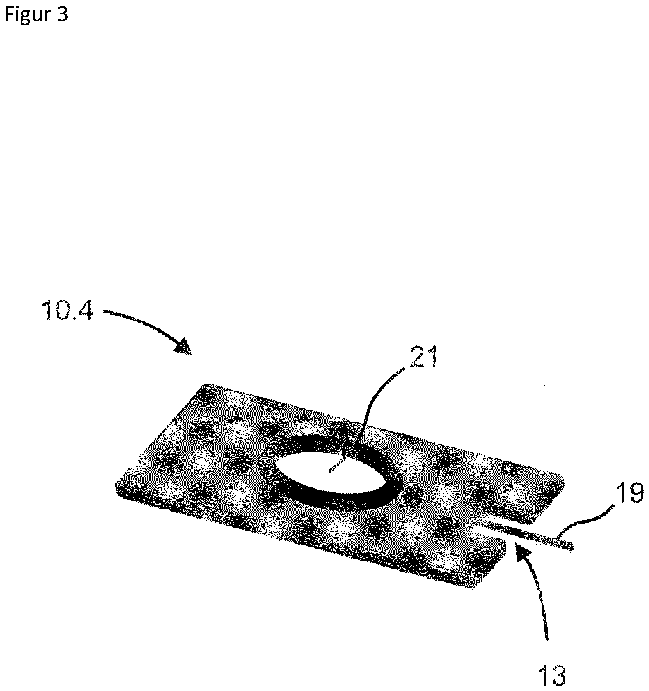

Figur 3 zeigt eine Multisensorplatte 10.4 mit einem Loch. Die Multisensorplatte 10.4 kann somit als Bohnenwaage 10.4 verwendet werden. In der Bohnenwaage 10.4 befindet sich ein Loch 21 bzw. eine Öffnung 21, durch das/die Bohnen in einen Auffangtrichter über eine Mühle fallen können. Eine Messung des Bohnengewichts dient der Qualität aber auch Quantität, um genügend Bohnenvorrat bereitstellen zu können oder Kontrolle über den tatsächlichen Bestand zu haben. Wie in Figur 2 ist das Kabel 19 an der U-förmigen Ausnehmung 13 angeordnet.

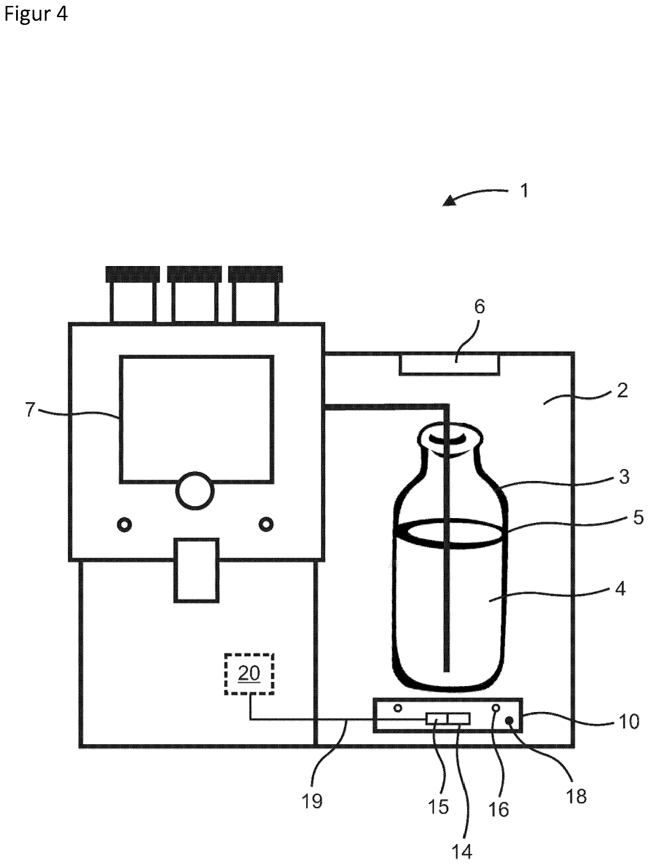

Figur 4 zeigt eine grundsätzliche Ausführung eines erfindungsgemässen Getränkezubereitungsautomaten 1. Der Getränkezubereitungsautomat 1 kann als Kaffeeautomat ausgeführt sein. In einem Aufnahmebereich 2 befindet sich ein Behälter 3 für Material, der hier Milch als Material 4 enthält. Das Material 4 im Behälter 3 weist einen Füllstand 5 auf. Der erste Aufnahmebereich 2 verfügt über eine Detektiervorrichtung 6, die konfiguriert ist, eine Form und/oder Art eines Behälters (bzw. Gefäßes) zu detektieren. Im Aufnahmebereich 2 befindet sich eine Multisensorplatte 10. Diese Multisensorplatte 10 ist im Aufnahmebereich 2 derart positioniert, so dass darauf der Behälter 3, der hier als Flasche dargestellt ist, abgestellt werden kann. In einer bevorzugten Ausführungsform ist der Aufnahmebereich 2 gekühlt. Die Multisensorplatte 10 umfasst eine Steuereinheit 14 (bzw. Bestimmungseinheit) zur Ermittlung von Werten bezüglich des Materials 4 sowie eine Schnittstelle 15 (bzw. Sendeeinheit) zum Senden der ermittelten Werte. Die Schnittstelle 15 kann ein Bestandteil der Steuereinheit 14 sein. Die Multisensorplatte 10 umfasst weiterhin mindestens zwei Gewichtssensoren 16, die mit der Steuereinheit 14 verbunden sind, um Signale bezüglich Gewichts an die Steuereinheit 14 zu übermittelten. Die Multisensorplatte 10 kann zudem einen Temperatursensor 18 umfassen, der ebenfalls mit der Steuereinheit 14 verbunden ist. Über ein Kabel 19 ist die Multisensorplatte 10 an eine Verarbeitungseinheit 20 angeschlossen, die hier im Getränkezubereitungsautomaten 1 angeordnet ist. Hier ist die Verarbeitungseinheit 20 außerhalb des Aufnahmebereichs 2 des Getränkezubereitungsautomaten 1 angeordnet. Es ist auch denkbar, dass die Verarbeitungseinheit 20 innerhalb des Aufnahmebereichs 2 des Getränkezubereitungsautomaten 1 angeordnet ist (nicht gezeigt). Ferner ist denkbar, dass die Verarbeitungseinheit 20 kabellos mit der Multisensorplatte 10 verbunden ist (nicht dargestellt). Die Verarbeitungseinheit 20 kann als Mikrorechner- oder Prozessor mit entsprechenden Einheiten ausgeführt sein. Die Verarbeitungseinheit 20 sendet beispielsweise Informationen auf ein Display 7 des Getränkezubereitungsautomaten zur Anzeige. Verschiedenste Werte und Informationen können abgerufen werden, wie z.B. wann eine letzte Bevorratung stattgefunden hat oder wie lange das Material 4 basierend auf historischen Daten noch vorrätig sein wird. Die Werte und Informationen können auch über eine App auf einem mobilen Gerät abgerufen werden. Das mobile Gerät kommuniziert dafür über eine entsprechende Verbindung mit der Verarbeitungseinheit 20.

In der Steuereinheit 14 werden aus den Signalen der Gewichtssensoren 16 und des Temperatursensors Werte ermittelt. Eine analog/digital Wandlung findet dabei statt. Die ermittelten Werte werden über das Kabel 19 an die Verarbeitungseinheit 20 des Getränkezubereitungsautomaten 1 übertragen, wo eine Verarbeitung der Werte erfolgt. Die von der Verarbeitungseinheit 20 verarbeiteten Werte entsprechen beispielsweise dem Füllstand 5 des Materials 4 und der Position des Behälters 3 mit Material 4 auf der Messfläche der Oberseite der Multisensorplatte 10. Vom Getränkezubereitungsautomat 1 kann ein Signal entsprechend der Bevorratung und/oder der Position des Behälters 3 ausgegeben werden. Dies kann ein akustisches Signal oder ein optisches Signal sein, dass am Kaffeeautomat 1 ausgegeben wird. In einer bevorzugten Ausführungsform sendet die Verarbeitungseinheit 20 Informationen auf ein Display 7 zur Anzeige oder an ein mobiles Gerät. Die Informationen können auch abgerufen werden und einer Temperaturüberwachung im gekühlten Aufnahmebereich 2 dienen. Die Live-/Ist-Situation des Materials 4, d.h. der Milch, kann überwacht und dargestellt werden, was einer konstanten Füllstandüberwachung und/oder Frischeüberwachung entspricht. Zudem kann eine Überwachung von Interaktionen erfolgen, z.B. mit Hinweisen zur Reinigung, Entkalkung oder sonstigen Wartung, zum Auffüllen von Zutaten, über die Bezüge von Getränken, oder zu Manipulationen am Automaten. Die Frische der Mich oder ein Ablaufdatum kann angeben bzw. angezeigt werden. Aufgrund der durch die Verarbeitungseinheit 20 ermittelten Werte kann in einer besonderen Ausführungsform die Benutzerführung angepasst werden. Beispielsweise könne Vorschläge und Anpassungen der Benutzerführung vorgenommen werden. Der Kaffeeautomat 1 kann aufgrund einer fehlenden Zutat wie Milch keinen Cappuccino mehr herstellen, somit können aktiv herstellbare und verfügbare Getränke beworben und angezeigt werden. Dies entspricht einer dynamischen Menüanpassung bezüglich aktiv herstellbarer und ausgebbarer Getränke. Mittels Multisensorplatte 10 kann neben der Anwesenheit eines Behälters 3 auch eine Bewegung des Behälters 3 detektiert oder festgestellt werden.

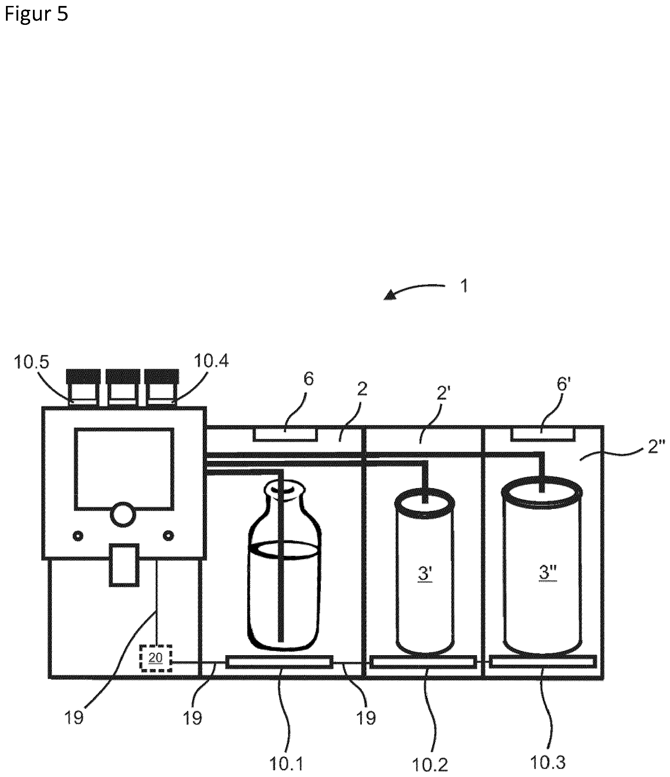

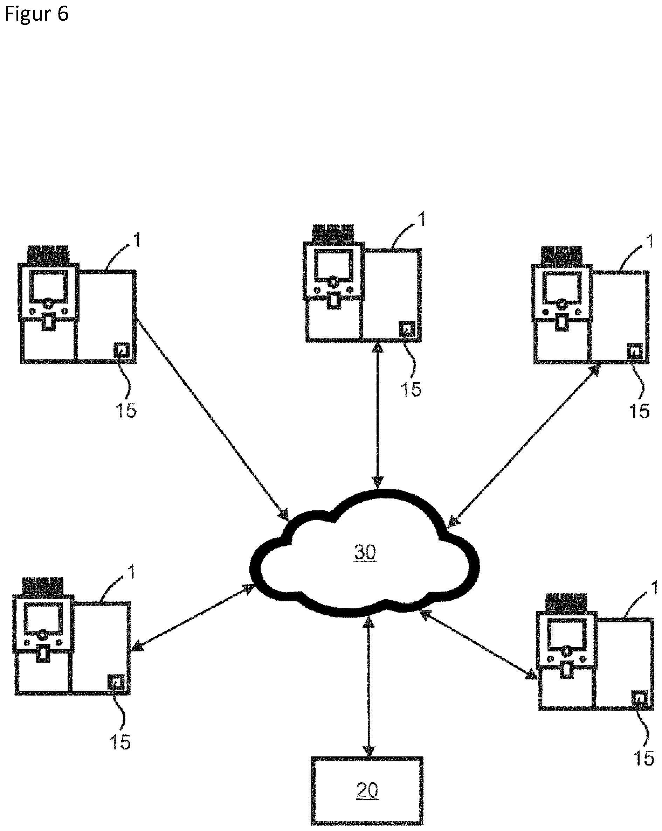

Figur 5 zeigt einen Getränkezubereitungsautomat 1 mit mehreren Multisensorplatten 10.1 bis 10.5 zur entsprechenden Materialbestimmung. Der Getränkezubereitungsautomat 1 umfasst neben einem ersten Aufnahmebereich 2, einen zweiten Aufnahmebereich 2' sowie einen dritten Aufnahmebereich 2". Im zweiten Aufnahmebereich 2' auf einer zweiten Multisensorplatte 10.2 ist ein zweiter Behälter 3' positioniert. Im dritten Aufnahmebereich 2" auf einer dritten Multisensorplatte 10.3 ist ein dritter Behälter 3" platziert. Der erste Aufnahmebereich 2 verfügt über eine Detektiervorrichtung 6 und der dritte Aufnahmebereich 2" verfügt über eine zweite Detektiervorrichtung 6'. Die Detektiervorrichtungen 6, 6'sind konfiguriert, eine Form und/oder Art eines Behälters (bzw. Gefäßes) zu detektieren. Im zweiten Aufnahmebereich 2' ist keine Detektiervorrichtung vorhanden, weil dort immer die gleichen Behälter 3' Verwendung finden, wohingegen im ersten Aufnahmebereich 2 und dritten Aufnahmebereich 2" die Form der Behälter 3 und 3' variieren kann. Die Multisensorplatten 10.1 bis 10.3 sind mittels Kabel 19 an die Verarbeitungseinheit 20 angeschlossen. Es ist denkbar, dass die Verarbeitungseinheit 20 kabellos mit den Multisensorplatten 10.1 bis 10.3 verbunden ist (nicht dargestellt). Ebenfalls an die Verarbeitungseinheit 20 angeschlossen (hier: über eine kabellose Verbindung) sind eine erste Bohnenwaage 10.4 und eine zweite Bohnenwaage 10.5. In der dargestellten Ausführungsform ist die Verarbeitungseinheit 20 außerhalb der Aufnahmebereiche 2, 2', 2" des Getränkezubereitungsautomaten 1 angeordnet. Es ist auch denkbar, dass die Verarbeitungseinheit 20 innerhalb zumindest einer der Aufnahmebereiche 2, 2', 2" des Getränkezubereitungsautomaten 1 angeordnet ist (nicht gezeigt). Ein Getränkezubereitungsautomat 1 gemäss Fig. 6 lässt sich auch in ein Netzwerk wie in Fig. 2 und 3 dargestellt, einbinden. Die Multisensorplatten 10.1 bis 10.5 können über einen Multiplexer verbunden sein. Jede Multisensorplatte10.1 bis 10.5 kann zur Fehlerkorrektur eingesetzt werden. Zudem kann jede Multisensorplatte 10.1 bis 10.5 für Plausibilitätschecks oder Plausibilitätsrückkopplungen bezüglich Verbrauchs und Vorrat eingesetzt werden. Dabei kann eine Rückkopplungsthese zum Einsatz kommen.

Figur 6 zeigt ein Getränkezubereitungsautomatensystem, das eine Vielzahl von Getränkezubereitungsautomaten 1 umfasst, die sich eine einzige Verarbeitungseinheit 20 teilen. Die Getränkezubereitungsautomaten 1 sind jeweils an ein Netzwerk 30 angeschlossen, d.h. jeweils kommunikativ mit dem Netzwerk 30 verbunden. Die einzelne Verarbeitungseinheit 20 befindet sich ausserhalb der Getränkezubereitungsautomaten 1 und ist ebenfalls an das Netzwerk 30 angeschlossen, d.h. die einzige Verarbeitungseinheit 20 ist zwar räumlich außerhalb der Getränkezubereitungsautomaten 1 angeordnet, ist jedoch überdas Netzwerk 30 mit jedem der Getränkezubereitungsautomaten 1 kommunikativ verbunden und somit von jedem der Getränkezubereitungsautomaten 1 umfasst. Bei dem Netzwerk 30 kann es sich um ein drahtloses und/oder drahtgebundenes Netzwerk handeln. Dies kann proprietär, privat oder öffentlich sein. Die Getränkezubereitungsautomaten 1 können ermittelte Werte in das Netzwerk 30 senden oder liefern, jedoch auch bidirektional kommunizieren. Das Senden der ermittelten Werte zur Verarbeitung erfolgt durch die jeweiligen Schnittstellen 15 (bzw. Sendeeinheiten), die jeweils Teil der Steuereinheit (nicht dargestellt) der jeweiligen Getränkezubereitungsautomaten 1 sind. Das Senden der ermittelten Werte zur Verarbeitung kann jedoch auch von einer lokal im Getränkezubereitungsautomaten 1 befindlichen Verarbeitungseinheit 20 erfolgen (nicht dargestellt, aber z.B. wie in Fig. 4 gezeigt). Von der externen Verarbeitungseinheit 20 werden Rückmeldungen an die Getränkezubereitungsautomaten 1 gesendet, die beispielsweise Informationen wie im Zusammenhang mit Fig. 4 beschrieben, beinhalten.

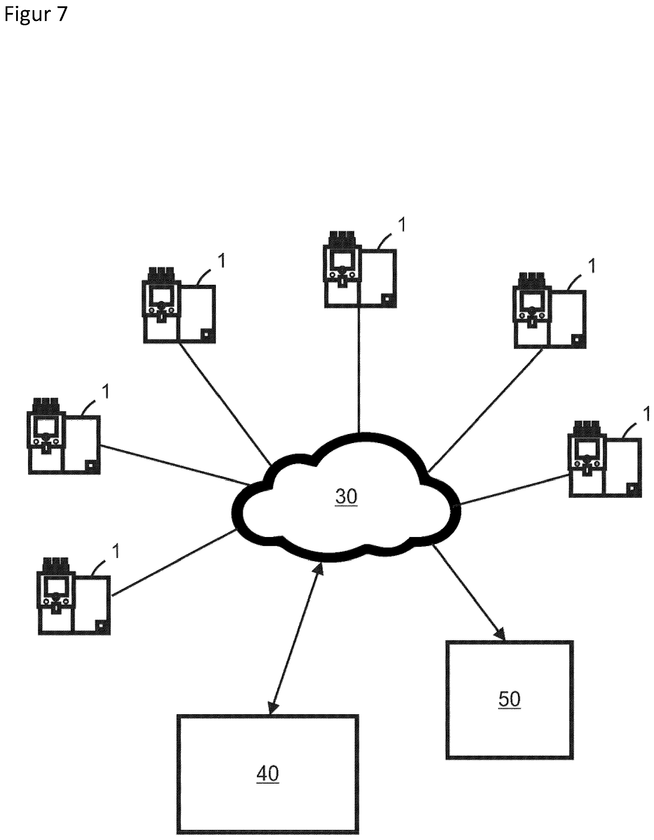

Figur 7 zeigt ein Getränkezubereitungsautomatensystem, das eine Vielzahl von Getränkezubereitungsautomaten 1 umfasst, die sich eine einzige Verarbeitungseinheit 20 teilen. Die Getränkezubereitungsautomaten 1 sind jeweils an ein Netzwerk 30 angeschlossen, d.h. jeweils kommunikativ mit dem Netzwerk 30 verbunden. Das Netzwerk 30 kann sich auf das Internet beziehen. Eine Zentralverarbeitungseinheit 40 ist an das Netzwerk 30 angeschlossen, kommunikativ mit den Getränkezubereitungsautomaten 1 verbunden und erhält ermittelte Werte zu Verarbeitung. Die Zentralverarbeitungseinheit 40 kann sich in einem Rechenzentrum befinden oder ein entsprechend ausgerüstet und konfigurierter Server sein. Die Zentralverarbeitungseinheit 40 kann auch als Cloudservice ausgeführt sein. An das Netzwerk 30 ist weiterhin eine Bestell- oder Betriebserfassungseinheit angeschossen. Diese erhält von der Zentralverarbeitungseinheit 40 Information. Die Zentralverarbeitungseinheit 40 kann aufgrund von vergangenen und aktuell ermittelten Werten auch zukünftige ableiten, d.h. projizieren. Wenn beispielsweise ein Betreiber von mehreren Getränkezubereitungsautomaten 1 in einem Stadtbezirk tätig ist, kann eine optimierte Routenplanung für die Bevorratung der Getränkezubereitungsautomaten 1 erfolgen. Die Zentralverarbeitungseinheit 40 kann durch künstliche Intelligenz, wie maschinellem Lernen, zur Qualitätssicherung beitragen. Zur Verbesserung des Unterhalts der Getränkezubereitungsautomaten 1 kann eine vorbeugende oder vorausschauende Instandhaltung eingesetzt werden. Das Getränkezubereitungsautomatensystem umfasst ferner eine Betriebserfassungseinheit 50, die dazu konfiguriert ist, eine Betriebszeit einzelner Getränkezubereitungsautomaten 1 des Getränkezubereitungsautomatensystems zu erfassen. Durch das Erfassen der Betriebszeit kann das Ende der Lebensdauer von Komponenten der einzelnen Getränkezubereitungsautomaten 1(d.h. von Teilsystemen und Systemen davon) präziser vorhergesagt und bestimmt werden. Die Betriebserfassungseinheit kann auch eine Bestelleinheit umfassen, die dazu konfiguriert ist, eine Bestellung von aufgebrauchtem Material (in dem oder den Behälter(n) für Material) zu veranlassen. Durch die Zentralverarbeitungseinheit 40 können Abrechnung oder Verrechnungen von Material 4 bzw. Zutaten mittels gesammelter Werte und Daten erfolgen.

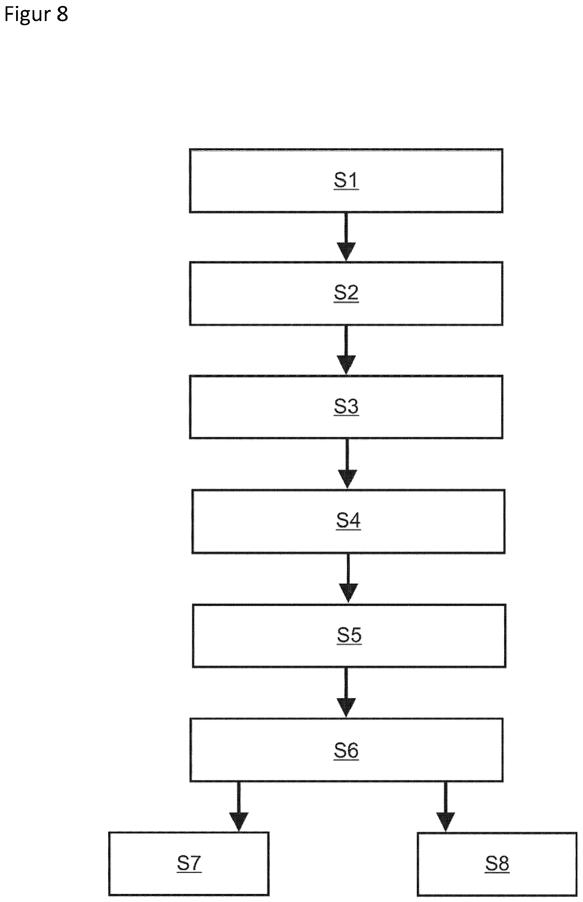

Figur 8 zeigt eine schematische Darstellung eines Verfahrens zur Bestimmung von Material für einen Getränkezubereitungsautomaten. Das Verfahren, insbesondere für einen Kaffeeautomat, umfasst in einem ersten Schritt S1 das Ankoppeln einer erfindungsgemäßen Multisensorplatte an den Getränkezubereitungsautomaten. Es folgt Schritt S2 mit dem Herstellen einer Wirkung des Materials auf die Multisensorplatte. Danach werden im Schritt S3 Werte bezüglich Material durch die Multisensorplatte ermittelt. Die Werteermittlung erfolgt bevorzugt kontinuierlich. Die ermittelten Werte werden im Schritt S4 zur Verarbeitung gesendet bzw. übertragen. Im Schritt S5 erfolgt die Verarbeitung der ermittelten Werte, wobei die verarbeiteten Werte im Wesentlichen dem Füllstand des Materials entsprechen und ein Signal entsprechend der Bevorratung ausgeben wird. In einem weiteren Schritt S6 erfolgt das Überprüfen der ermittelten und verarbeiteten Werte der Multisensorplatte in regelmässigen Zeitabständen. In Abhängigkeit davon kann in einem Schritt S7 das Auslösen eines Bestellsignals für eine oder mehrere Zutaten oder Materialen in Abhängigkeit der ermittelten und verarbeiteten Werte erfolgen. Ebenfalls in Abhängigkeit von Schritt S6 kann in einem Schritt S8 die Bestimmung einer zeitlichen Verfügbarkeit für eine oder mehrere Zutaten in Abhängigkeit der ermittelten und verarbeiteten Werte erfolgen. Das Senden der ermittelten Werte zur Verarbeitung im Schritt S4 kann Werte eines Temperatursensors umfassen, damit eine Auswertung der Werte des Temperatursensors erfolgen kann. Das Senden der ermittelten Werte zur Verarbeitung im Schritt S4 kann eine Übermittlung in ein Netzwerk umfassen. Die Verarbeitung der ermittelten Werte im Schritt S5 kann zentral erfolgen, vorzugsweise unter Einbeziehung der ermittelten Werte von mehreren erfindungsgemäßen Getränkezubereitungsautomaten. Danach können Rückmeldungen an einen oder mehrere erfindungsgemäße Getränkezubereitungsautomaten erfolgen, aber auch an weitere feste und mobile Geräte von Benutzern, Betreibern, oder Dienstleistern.

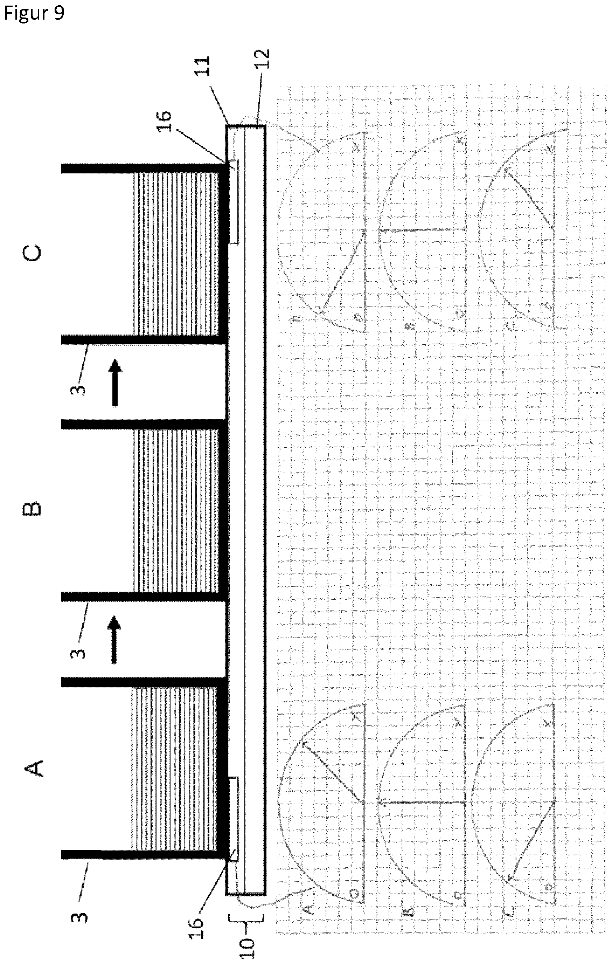

Figur 9 zeigt eine schematische Darstellung einer erfindungsgemäßen Multisensorplatte 10 und illustriert das Prinzip, wie über die mindestens zwei Gewichtssensoren 16 der Multisensorplatte ein Gewicht und eine Position von einem Behälter 3 für Material bestimmt werden kann. In der mit "A" bezeichneten Situation befindet sich der Behälter 3 für Material auf der Messfläche auf der Oberseite 11 im linken Bereich der Multisensorplatte 10 im Wesentlichen direkt über dem im linken Bereich angeordneten Gewichtssensor 16 und weit entfernt vom im rechten Bereich angeordneten Gewichtssensor 16. Im unteren Teil der Figur 9 ist schematisch die Stärke des Signals des Gewichtssensors 16 im linken Bereich und die Stärke des Signals des Gewichtssensors 16 im rechten Bereich angegeben. In der mit "A" bezeichneten Situation liefert der Gewichtssensor 16 im linken Bereich ein starkes Signal, wogegen der Gewichtssensor 16 im rechten Bereich ein schwaches Signal liefert. Aus dem Vergleich der Signalstärken der beiden Gewichtssensoren 16 kann geschlossen werden, dass sich der Behälter 3 für Material in Situation "A" im linken Bereich der Multisensorplatte befindet. In der Situation "B" wurde der Behälter 3 für Material in den mittleren Bereich der Multisensorplatte 10 verschoben (siehe Pfeil). In diesem Fall liefern die beiden Gewichtssensoren 16 ein gleich starkes Signal, was einen Rückschluss auf die mittige Anordnung des Behälters 3 für Material auf der Multisensorplatte 10 erlaubt. In der Situation "C" wurde der Behälter 3 für Material noch weiter in den rechten Bereich der Multisensorplatte 10 verschoben (siehe Pfeil), sodass sich dieser im Wesentlichen direkt über dem im rechten Bereich angeordneten Gewichtssensor 16 befindet. In diesem Fall liefert der Gewichtssensor 16 im linken Bereich nur noch ein schwaches Signal, wogegen der Gewichtssensor 16 im rechten Bereich ein starkes Signal liefert, was einen Rückschluss auf die Anordnung des Behälters 3 für Material auf der rechten Seite der Multisensorplatte 10 erlaubt. Folglich kann in allen drei Situationen über das Verhältnis der Signalstärke der beiden Gewichtssensoren 16 ein Rückschluss auf die Position des Behälters 3 für Material auf der Messfläche der Oberseite 11 der Multisensorplatte 10 gezogen werden und damit die Position und auch eine Positionsänderung des Behälters 3 für Material im Laufe der Zeit auf besagter Messfläche ermittelt werden. In allen drei Fällen ist es möglich, aus dem Gesamtsignal der beiden Gewichtssensoren 16 einen Rückschluss auf das Gewicht des Behälters 3 für Material zu ziehen und dieses exakt zu bestimmen.

### Bezugszeichenliste

- 1:: Getränkezubereitungsautomat
- 2:: erster Aufnahmebereich
- 2':: zweiter Aufnahmebereich
- 2":: dritter Aufnahmebereich
- 3:: erster Behälter
- 3':: zweiter Behälter
- 3":: dritter Behälter
- 4:: Material (z.B. Verbrauchsmaterial)
- 5:: Füllzustand
- 6:: Detektiervorrichtung
- 6':: zweite Detektiervorrichtung
- 7:: Display
- 10: Multisensorplatte
- 10.1:: Milchwaage (als Multisensorplatte)
- 10.2:: erste Zutatenwaage (als Multisensorplatte)
- 10.3:: zweite Zutatenwaage (als Multisensorplatte)
- 10.4:: erste Bohnenwaage (als Multisensorplatte)
- 10.5:: zweite Bohnenwaage (als Multisensorplatte)
- 11:: Oberteil (mit einer Messfläche zur Positionierung eines Behälters für Material)
- 12:: Unterteil
- 13:: Ausnehmung
- 14:: Steuereinheit (bzw. Bestimmungseinheit)
- 15:: Schnittstelle (bzw. Sendeeinheit)
- 16:: Gewichtssensor(en)
- 18:: Temperatursensor
- 19:: Kabel
- 20:: Verarbeitungseinheit
- 21:: Öffnung
- 30:: Netzwerk (z.B. Cloud)
- 40:: zentrale Verarbeitungseinheit ("Zentralverarbeitungseinheit")
- 50:: Betriebserfassungseinheit
- S1- S8:: Verfahrensschritte

## Patentansprüche

1. Multisensorplatte (10, 10.1-10.5) für einen Getränkezubereitungsautomaten (1), umfassend
ein Oberteil (11) mit einer Messfläche zur Positionierung eines Behälters (4) für Material;
ein Unterteil (12), das im Wesentlichen der Form des Oberteils (11) entspricht und mit dem Oberteil (11) verbunden ist, wobei zwischen dem Oberteil (11) und dem Unterteil (12) zumindest bereichsweise ein Zwischenraum ausgebildet ist;
mindestens zwei Gewichtssensoren (16, 16'), die im Zwischenraum angeordnet sind und jeweils dazu geeignet sind, aus einer auf die Messfläche einwirkenden Gewichtskraft ein Signal zu generieren; und
eine Steuereinheit (14), die konfiguriert ist, die von den mindestens zwei Gewichtssensoren (16) generierten Signale zu empfangen und daraus jeweils einen Gewichtswert zu ermitteln,
**dadurch gekennzeichnet, dass**
die mindestens zwei Gewichtssensoren (16, 16') in einer Richtung parallel zur Messfläche des Oberteils (11) an zwei voneinander beabstandeten Positionen angeordnet sind, und
die Steuereinheit (14) konfiguriert ist, die jeweils ermittelten Gewichtswerte an einer elektronischen Schnittstelle (15) der Multisensorplatte bereitzustellen.

2. Multisensorplatte (10, 10.1-10.5) nach dem vorhergehenden Anspruch, **dadurch gekennzeichnet, dass** die elektronische Schnittstelle (15) der Multisensorplatte (10, 10.1-10.5) mit einer Verarbeitungseinheit (20, 40) verbunden ist, wobei die elektronische Schnittstelle (15) der Multisensorplatte optional über ein Netzwerk (30), bevorzugt über eine Cloud, mit der Verarbeitungseinheit (20, 40) verbunden ist, wobei die Verarbeitungseinheit (20, 40) besonders bevorzugt
i) Teil eines Getränkezubereitungsautomaten (1) ist oder Teil eines Computers ist, der über das Netzwerk (30), bevorzugt über eine Cloud, mit der elektronischen Schnittstelle (15) der Multisensorplatte (10, 10.1-10.5) verbunden ist, wobei die Verarbeitungseinheit (20, 40) insbesondere als eine Zentralverarbeitungseinheit (40) ausgestaltet ist; und/oder
ii) mit der die elektronische Schnittstelle (15) der Multisensorplatte (10, 10.1-10.5) über eine drahtlose Verbindung verbunden ist oder über ein Kabel (19) verbunden ist, wobei das Kabel die Multisensorplatte bevorzugt an einer Oberfläche der Multisensorplatte (10, 10.1-10.5) verlässt, die im Wesentlichen senkrecht zur Messfläche des Oberteils (11) der Multisensorplatte (10, 10.1-10.5) ist, wobei das Kabel (19) die Multisensorplatte besonders bevorzugt an einer Ausnehmung (13) der Multisensorplatte (10, 10.1-10.5) verlässt, die in eine Richtung parallel zur Messfläche des Oberteils verläuft, wobei die Ausnehmung (13) besonders bevorzugt U-förmig ausgestaltet ist.

3. Multisensorplatte (10, 10.1-10.5) nach dem vorhergehenden Anspruch, **dadurch gekennzeichnet, dass** die Verarbeitungseinheit (20, 40) konfiguriert ist, zumindest aus Gewichtswerten, die an der elektronischen Schnittstelle (15) der Multisensorplatte (10, 10.1-10.5) bereitgestellt werden, ein Gewicht und eine Position von mindestens einem auf der Messfläche des Oberteils (11) positionierten Behälter (4) für Material zu ermitteln.

4. Multisensorplatte (10, 10.1-10.5) nach einem der vorhergehenden Ansprüche, **dadurch gekennzeichnet, dass** die Multisensorplatte (10, 10.1-10.5) ferner einen Temperatursensor umfasst, der dazu geeignet ist, eine Temperatur einer Umgebung der Multisensorplatte (10, 10.1-10.5) zu erfassen und daraus ein Signal zu generieren, wobei die Steuereinheit konfiguriert ist, die vom Temperatursensor generierten Signale zu empfangen und daraus einen Temperaturwert zu ermitteln, und wobei die Steuereinheit (14) konfiguriert ist, den ermittelten Temperaturwert an der elektronischen Schnittstelle (15) der Multisensorplatte (10, 10.1-10.5) bereitzustellen.

5. Multisensorplatte (10, 10.1-10.5) nach Anspruch 4, **dadurch gekennzeichnet, dass** die Verarbeitungseinheit (20, 40) konfiguriert ist, aus den Gewichtswerten, die jeweils an der elektronischen Schnittstelle (15) der Multisensorplatte (10, 10.1-10.5) bereitgestellt werden, und unter Berücksichtigung des Temperaturwerts, der an der elektronischen Schnittstelle (15) der Multisensorplatte (10, 10.1-10.5) bereitgestellt wird,
i) ein Gewicht und eine Position von mindestens einem auf der Messfläche des Oberteils (11) positionierten Behälter (4) für Material zu ermitteln; und/oder
ii) zu ermitteln, ob der Behälter (4) für Material mit einem warmen oder kalten Material befüllt wurde; und/oder
iii) zu ermitteln, ob eine vorgegebene Temperatur in der Umgebung der Multisensorplatte, bevorzugt in einem Aufnahmebereich eines Getränkezubereitungsautomaten, eingehalten wird.

6. Multisensorplatte (10, 10.1-10.5) nach einem der vorhergehenden Ansprüche, **dadurch gekennzeichnet, dass** das Oberteil (11) und das Unterteil (12)
i) flüssigkeitsdicht miteinander verbunden sind, wobei bevorzugt die gesamte Multisensorplatte (10, 10.1-10.5) flüssigkeitsdicht ausgestaltet ist; und/oder
ii) so miteinander verbunden sind, dass sie einen flachen Quader ausbilden; und/oder
iii) in einer Richtung senkrecht auf die Messfläche des Oberteils (11) zusammen eine Höhe von maximal 1,5 cm aufweisen; und/oder
iv) ganz oder teilweise aus Kunststoff bestehen.

7. Multisensorplatte (10, 10.1-10.5) nach einem der vorhergehenden Ansprüche, **dadurch gekennzeichnet, dass** die mindestens zwei Gewichtssensoren (16, 16') jeweils
i) ein Sensorsignal abgeben, das digitalisierbar und filterbar ist;
und/oder
ii) als Lastsensor ausgestaltet sind; und/oder
iii) als Dehnmessstreifen-Sensor ausgestaltet sind.

8. Getränkezubereitungsautomat (1), insbesondere ein Kaffeeautomat, umfassend:
einen Aufnahmebereich (2, 2', 2") zur Aufnahme von mindestens einem Behälter (4) für Material;
eine Multisensorplatte (10, 10.1-10.5) gemäß einem der vorhergehenden Ansprüche, wobei die Multisensorplatte (10, 10.1-10.5) im Aufnahmebereich (2, 2', 2") positioniert ist; und
eine Verarbeitungseinheit (20, 40), die kommunikativ mit der elektronischen Schnittstelle (15) der Multisensorplatte (10, 10.1-10.5) verbunden ist, wobei die Verarbeitungseinheit konfiguriert ist, zumindest aus Gewichtswerten, die an der elektronischen Schnittstelle (15) der Multisensorplatte (10, 10.1-10.5) bereitgestellt werden, ein Gewicht und eine Position von mindestens einem auf der Messfläche des Oberteils (11) positionierten Behälter (4) für Material zu ermitteln.

9. Getränkezubereitungsautomat (1) nach Anspruch 8, **dadurch gekennzeichnet, dass** die Verarbeitungseinheit (20, 40) konfiguriert ist, zumindest aus den Gewichtswerten, die jeweils an der elektronischen Schnittstelle (15) der Multisensorplatte (10, 10.1-10.5) bereitgestellt werden, und unter Berücksichtigung eines Temperaturwerts, der an der elektronischen Schnittstelle (15) der Multisensorplatte (10, 10.1-10.5) bereitgestellt wird,
i) ein Gewicht und eine Position von mindestens einem auf der Messfläche des Oberteils (11) positionierten Behälter (4) für Material zu ermitteln; und/oder
ii) zu ermitteln, ob der Behälter (4) für Material mit einem warmen oder kalten Material befüllt wurde; und/oder
iii) zu ermitteln, ob eine vorgegebene Temperatur in der Umgebung der Multisensorplatte, bevorzugt in einem Aufnahmebereich eines Getränkezubereitungsautomaten, eingehalten wird.

10. Getränkezubereitungsautomat (1) nach einem der Ansprüche 8 oder 9, **dadurch gekennzeichnet, dass** die Verarbeitungseinheit (20, 40) konfiguriert ist, das Ermitteln von einem Gewicht und einer Position von dem mindestens einen Behälter (4) für Material, optional auch das Ermitteln einer Temperatur, in regelmäßigen Zeitabständen zu wiederholen.

11. Getränkezubereitungsautomat (1) nach einem der Ansprüche 8 bis 10, **dadurch gekennzeichnet, dass** die Verarbeitungseinheit (20, 40) konfiguriert ist, ein ermitteltes Gewicht, optional auch eine ermittelte Position, von dem mindestens einen Behälter (4) für Material
i) zur Bewertung zu verwenden, ob in Bezug auf den Behälter (4) für Material und/oder in Bezug auf ein Material in diesem Behälter (4) ein Bestellsignal ausgelöst wird; und/oder
ii) zur Bestimmung einer zeitlichen Verfügbarkeit des Behälters (4) für Material und/oder eines Materials in diesem Behälter (4) zu verwenden.

12. Getränkezubereitungsautomatensystem, umfassend mehrere Getränkezubereitungsautomaten (1) gemäß einem der Ansprüche 8 bis 11, wobei sich die mehreren Getränkezubereitungsautomaten (1) eine einzige Verarbeitungseinheit (20, 40) eines Getränkezubereitungsautomaten (1) gemäß einem der Ansprüche 8 bis 11 teilen.

13. Verfahren zur Bestimmung eines Gewichts und einer Position von einem Behälter (4) für Material in einem Getränkezubereitungsautomaten (1), insbesondere für einen Kaffeeautomaten, umfassend die Schritte:
Bereitstellen eines Getränkezubereitungsautomaten gemäß einem der Ansprüche 8 bis 11;
Positionieren von mindestens einem Behälter (4) für Material auf der Multisensorplatte (10, 10.1-10.5) des Getränkezubereitungsautomaten; und
Ermitteln von einem Gewicht und einer Position von dem mindestens einen Behälter (4) für Material zumindest aus Gewichtswerten, die an der elektronischen Schnittstelle (15) der Multisensorplatte (10, 10.1-10.5) bereitgestellt werden.

14. Verfahren nach Anspruch 13, **dadurch gekennzeichnet, dass** das Ermitteln von einem Gewicht und einer Position von dem mindestens einen Behälter (4) für Material aus Gewichtswerten erfolgt, die an der elektronischen Schnittstelle (15) der Multisensorplatte (10, 10.1-10.5) bereitgestellt werden, und unter Berücksichtigung eines Temperaturwerts erfolgt, der an der elektronischen Schnittstelle (15) der Multisensorplatte (10, 10.1-10.5) bereitgestellt wird.

15. Verfahren nach einem der Ansprüche 13 oder 14, **dadurch gekennzeichnet, dass** das Ermitteln von einem Gewicht und einer Position von dem mindestens einen Behälter (4) für Material, optional auch das Ermitteln einer Temperatur, in regelmäßigen Zeitabständen wiederholt wird.

16. Verfahren nach einem der Ansprüche 13 bis 15, **dadurch gekennzeichnet, dass** ein ermitteltes Gewicht, optional auch eine ermittelte Position, von dem mindestens einen Behälter (4) für Material
i) zur Bewertung verwendet wird, ob in Bezug auf den Behälter (4) für Material und/oder in Bezug auf ein Material in diesem Behälter (4) ein Bestellsignal ausgelöst wird; und/oder
ii) zur Bestimmung einer zeitlichen Verfügbarkeit des Behälters (4) für Material und/oder eines Materials in diesem Behälter (4) verwendet wird; und/oder
iii) zur Bestimmung einer optimalen Routenplanung eines Lieferanten für Material verwendet wird.
